# EUROPÄISCHE PATENTSCHRIFT

(11) **EP 2 851 885 B1**
(45) Veröffentlichungstag und Bekanntmachung des Hinweises auf die Patenterteilung: **09.11.2016**
(21) Anmeldenummer: 14186752.3
(22) Anmeldetag: 04.09.2012
(51) Int. Cl.: G08G 1/01, G07C 5/00

(54) **System zum Identifizieren von Nutzern in Fahrzeugen**
System for identifying users in vehicles
Système d'identification d'utilisateurs dans des véhicules

(43) Veröffentlichungstag der Anmeldung: 25.03.2015
(62) Teilanmeldung aus: 12182956.8
(73) Patentinhaber: Vodafone Holding GmbH, 40213 Düsseldorf (DE)
(72) Erfinder: Gehlen, Guido, 41462 Neuss (DE)
(74) Vertreter: Jostarndt Patentanwalts-AG

(56) Entgegenhaltungen:
- EP-A1- 2 384 049
- WO-A1-2008/010756
- DE-A1-102005 048 647

## Beschreibung

### Gebiet der Erfindung

Die Erfindung bezieht sich auf ein System zur Feststellung von Anzahl und Identität von Nutzern in einem Fahrzeug und auf ein Verfahren zum Betreiben dieses Systems.

### Hintergrund der Erfindung

Fahrzeuge können von verschiedenen Fahrern gefahren werden. Ebenso können verschiedene Personen mit einem Fahrzeug transportiert werden, auch wenn diese Personen nicht selber der Fahrer sind. Für eine Vielzahl von Zwecken und Anwendungen ist es von Bedeutung zu wissen, welcher Fahrer ein spezielles Fahrzeug führt und/oder welche Personen von diesem speziellen Fahrzeug als Passagiere transportiert werden. Beispielsweise kann eine Autovermietung für das Mietfahrzeug einen bestimmten Fahrer oder ein Gruppe von Fahrern im Falle einer Vermietung vorschreiben, um das Fahrzeug nur von berechtigten Personen mit Führerschein oder entsprechend sorgfältig fahrenden Personen führen zu lassen. Es wäre daher wünschenswert, wenn die Autovermietung kontrollieren könnte, ob ihre Vorgaben tatsächlich eingehalten werden. Eine Feststellung des Fahrers kann beispielsweise auch bei der Aufklärung von Verkehrsunfällen mit diesen Fahrzeugen hilfreich sein. In einem anderen Beispiel könnte ein Versicherungsunternehmen daran interessiert sein, die gefahrenen Kilometer eines Fahrzeugs bestimmten Personen zuordnen zu können. Auch für die Einleitung von Notfallmaßnahmen, beispielsweise nach Unfällen, wäre es wünschenswert, wenn eine Notfallzentrale schnell genaue Informationen über die Anzahl von Personen in einem Fahrzeug erhalten könnte.

DE 20 2008 013 951 U1 offenbart die elektronische Führung eines Fahrtenbuchs mittels Positionsdaten (beispielsweise GPS-Daten), die von einem Fahrzeug über eine drahtlose Netzwerkverbindung an einem Server übertragen werden. Hierbei kann allerdings nicht festgestellt werden, wie viele und welche Personen sich im Fahrzeug befinden. Gewichtssensoren unter den Fahrzeugsitzen zur Feststellung, ob ein Sitz im Fahrzeug durch eine Person besetzt ist, sind bekannt. Über diese Sensoren kann allerdings nicht die Identität der Person festgestellt werden.

US 5945919 offenbart ein System, bei dem die Positionen einer Vielzahl an Fahrzeugen überwacht werden und das jeweils nächste Fahrzeug einer Position eines Kunden zugeordnet wird, damit dieses eine Dienstleistung für diesen Kunden erbringen kann. Beispielsweise fahren die Fahrzeuge für ein Taxiunternehmen. Sobald ein Kunde im System ein Taxi anfordert, wird das jeweils nächste Fahrzeug zu diesem Kunden für seine Beförderung geschickt. Hierbei wird weder die Identität des Kunden noch die letztendliche Anzahl an Passagieren in diesem Taxi festgestellt. Insofern ist dem System nicht automatisch bekannt, welche und wie viele Personen sich in dem Taxi befinden.

DE 101 19 244 A1 offenbart ein Verfahren zur Vermittlung und Überwachung einer Reise von Reisenden. Hierbei wird die Position eines Fahrzeugs, das eine bestimmte Route befährt, und die Position eines möglichen Mitreisenden, der zu diesem Fahrzeug zwecks Mitnahme zusteigen möchte, bestimmt. Damit die Vermittlung von Mitreisenden zu transportwilligen Fahrern der entsprechenden Fahrzeuge vorgenommen werden kann, müssen die Fahrer und die Mitreisenden sich persönlich identifizieren. Insofern sind bei diesem Verfahren die beteiligten Personen von vornherein bekannt. Das Verfahren ist aber nur auf Personen anwendbar, die sich vorher persönlich zu erkennen gegeben haben. Insbesondere wird das Fahrzeug automatisch einem dem System bekannten bestimmten Fahrer zugeordnet, dem dann ein dem System bekannter Reisender als Mitreisender über das System angeboten wird. Kommt die Vermittlung zustande, sind Fahrer und Mitreisender im Voraus bereits bestimmt. Gegebenenfalls weitere mitreisende Personen können hier nicht erkannt werden. Ebenfalls kann nicht erkannt werden, ob der angegebene Fahrer im System auch der tatsächliche Fahrer ist.

DE 10 2005 048647 A1 offenbart ein Verfahren zur Ermittlung der Anzahl von Fahrgästen in öffentlichen Verkehrsmitteln bezogen auf jeweils einzelne Verkehrsmittel mit zugeordneten Routen und Verkehrszeiten hat die Schritte: (a) Ermitteln der Identifikationsnummern und der aktuellen Position der einzelnen Verkehrsmittel durch Auswerten von Mobilfunksignalen einer Mobilfunksende- oder Empfangseinheit, der dem jeweiligen Verkehrsmittel eindeutig zugeordnet ist und von dem Verkehrsmittel mitgeführt wird; (b) Bestimmen der Anzahl von Mobilfunkteilnehmern, die im Bereich der jeweiligen aktuellen Position eines Verkehrsmittels von Basisstationssystemen eines Mobilfunknetzes durch Auswertung von Mobilfunksignalen lokalisierbar sind und (c) statisches Ermitteln der tatsächlichen Anzahl der Fahrgäste eines jeweiligen Verkehrsmittels aus der im Bereich der aktuellen Position des Verkehrsmittels ermittelten Anzahl von Mobilfunkteilnehmern.

Eine Identifizierung von Fahrern oder Fahrzeuginsassen kann beispielsweise über IRIS-Scanner, Fingerabdrucksensoren oder andere Identifikationstechniken, die im Fahrzeug angeordnet sind, erfolgen. Dies setzt allerdings zum einen die Installation spezieller Sensoren im Fahrzeug und das Bereithalten zusätzlicher unüblicher und sehr spezieller Daten zur Personenidentifikation voraus. Damit wird der Aufwand zur Personenidentifikation stark erhöht.

Es ist daher ein System und ein entsprechendes Verfahren wünschenswert, mit dem die Anzahl und Identität beliebiger Personen in einem Fahrzeug ohne Zutun dieser Personen mit nur geringen Modifikationen am Fahrzeug identifiziert werden können. Es ist insbesondere wünschenswert festzustellen, ob das Fahrzeug von einer berechtigten Person gefahren wird.

### Zusammenfassung der Erfindung

Es ist eine Aufgabe der vorliegenden Erfindung, ein Verfahren und ein System bereitzustellen, mit dem die Anzahl und die Identität von Personen in einem Fahrzeug mit geringem zusätzlichem Aufwand ausreichend sicher festgestellt werden kann.

Diese Aufgabe wird gelöst durch ein System zur Feststellung von Anzahl und Identität von Nutzern in einem Fahrzeug, umfassend
- mindestens ein Fahrzeug mit einer zugeordneten individuellen Fahrzeug-ID und mit einem Fahrzeugmodul zur drahtlosen Übermittlung von fahrzeugbezogenen Orts- und Zeitdaten an das System,
- mindestens ein Mobilfunknetz mit einem Netzwerkserver und mehreren mobilen Terminals, geeignet zur Kommunikation zumindest in dem Mobilfunknetz, wobei den jeweiligen mobilen Terminals individuelle Terminal-IDs zugeordnet sind und die Nutzer der mobilen Terminals anhand der Terminal-IDs identifiziert werden können und der Netzwerkserver dazu ausgestaltet ist, terminalbezogene Orts- und Zeitdaten an das System zu übermitteln,
- ein oder mehrere Datenspeicher zur Speicherung der fahrzeugbezogenen Orts- und Zeitdaten zusammen mit der Fahrzeug-ID zur Ermittlung der individuellen Fahrtroute des mindestens einen Fahrzeugs und zur Speicherung der terminalbezogenen Orts- und Zeitdaten zusammen mit den Terminal-IDs sowie von Personendaten der den Terminal-IDs zugeordneten Nutzern zur Ermittlung individueller personenbezogener Bewegungsrouten für jedes der mobilen Terminals,
- einen Analyseserver, der dazu ausgestaltet ist, auf den einen oder die mehreren Datenspeicher zuzugreifen und die ermittelte individuelle Fahrtroute mit den ermittelten Bewegungsrouten zu vergleichen und bei einer zumindest in einem zeitlichen Intervall hinreichenden Übereinstimmung der individuellen Fahrtroute mit ein oder mehreren der individuellen Bewegungsrouten die betreffende Fahrzeug-ID mit den zu diesen individuellen Bewegungsrouten gehörigen Terminal-IDs zu verknüpfen und in dem oder den Datenspeichern zusammen mit den Personendaten der den Terminal-IDs zugeordneten Nutzern abzuspeichern,
wobei die Übereinstimmung nur hinreichend (U-FT) ist, wenn der Grad der Übereinstimmung oberhalb eines definierten Schwellenwertes (SW) liegt und für den Grad der Übereinstimmung die zeitliche und örtliche Übereinstimmung von Start- und Endpunkte (SP, EP) der individuellen Fahrtroute (FR) und den damit zu vergleichenden individuellen Bewegungsrouten (TR, TR1, TR2, TR3, TR4) mit einer höheren Gewichtung berücksichtigt wird als Punkte (P1, P2, P3) der Fahrt- und Bewegungsrouten (FR, TR) zwischen den Start- und Endpunkten (SP, EP).

Dieses System ermöglicht es, dass die Anzahl und die Identität von Personen in einem Fahrzeug mit geringem zusätzlichem Aufwand ausreichend sicher festgestellt werden kann. Die Personen werden hier auch als Nutzer (der Fahrzeuge und des mobilen Terminals) bezeichnet. Das Fahrzeug benötigt lediglich eine zusätzliche technische Einrichtung, die eine Ermittlung der Fahrroute des Fahrzeugs erlaubt. Das Fahrzeug kann beispielsweise mit einem M2M-Kommunikationsmodul mit optionalem Satellitennavigationsempfänger (beispielsweise GPS) ausgestattet werden. Außerdem sind die meisten Fahrzeuge heute bereits mit Navigationssystemen ausgerüstet, die eine Routenverfolgung erlauben. Eine alternative Nachrüstung von Fahrzeugen mit Navigationssystemen ist mit nur geringem Aufwand möglich. Die weitere Komponente, die die Nutzer zur Bewegungserkennung benötigen, ist ein mobiles Terminal, geeignet zum Kommunizieren in einem Mobilfunknetz. Solche Mobilfunkgeräte besitzen heutzutage nahezu alle Nutzer, so dass der Aufwand auf die Bereitstellung des Analyseservers und eine entsprechende Gestaltung der Datenverbindungen in dem System beschränkt ist. Der Analyseserver übernimmt dabei wesentliche Funktionen, insbesondere werden die unterschiedlichen

Informationen der zeitlichen Verläufe der Fahrzeug- und mobilen Terminalpositionen ausgewertet, um damit Nutzern zu Fahrzeugen zuzuordnen, ohne dass vorher ein Bezug zwischen deren Identität und einem Fahrzeug für die Analyse hergestellt sein muss. Das System kann mit nur einem Fahrzeug oder mit einer Vielzahl an Fahrzeugen betrieben werden. Das System kann nach Einrichten des Analyseservers für beliebige Anzahlen an Fahrzeugen und Nutzern hochskaliert werden, ohne dass zusätzliche Komponenten installiert werden müssen. Zusätzlich können mit dem erfindungsgemäßen System Kontroll- und Identifikationseinrichtungen zur Identifikation der Fahrer / Mitfahrer in oder an den Fahrzeugen, wie beispielsweise Fingerabdruck- oder Augen-Scanner oder Nahfeldsensoren, vermieden werden und gleichzeitig zumindest mit hoher Wahrscheinlichkeit festgestellt werden, ob sich eine oder mehrere befugte Person(en) (Nutzer) im Fahrzeug befinden und wie viele dieser Personen (Nutzer sich im Fahrzeug befinden. Über die Bewegungsrouten kann mit hoher Wahrscheinlichkeit auf den tatsächlichen Fahrer geschlossen werden.

Die im System verwendbaren Fahrzeuge können Fahrzeuge aller Art sein. Es muss lediglich möglich sein, die Fahrtroute für diese Fahrzeuge festzustellen. Die Fahrzeuge können dabei beispielsweise Fahrzeuge einer Autovermietung, eines Taxiunternehmens oder eines anderen Transportdienstleisters sein. Die dem jeweilige Fahrzeug zugeordnete individuelle Fahrzeug-ID kann vom Fachmann geeignet gewählt werden. Beispielsweise kann eine solche Fahrzeug-ID das Fahrzeug-Kennzeichen, die vom Fahrzeughersteller vergebene Fahrgestellnummer (VIN) oder eine andere eindeutige Bezeichnung sein. Das Fahrzeugmodul zur drahtlosen Übermittlung von fahrzeugbezogenen Orts- und Zeitdaten an das System kann dabei in die Fahrzeugkarosserei integriert beziehungsweise fest eingebaut oder als Nachrüstzusatzgerät in dem Fahrzeug deponiert werden. Das Fahrzeugmodul kann beispielsweise ein M2M-Kommunikationsmodul mit optionalem Satallitennavigationsempfänger (beispielsweise GPS) sein, ein Navigationsgerät oder ein Funkmodul sein, dessen Position über bekannte Techniken in einem Mobilfunknetz geortet werden kann. Diese Geräte können in einem Kommunikationsnetz eine eindeutige Bezeichnung, beispielsweise IMSI, MSISDN, sip adr, etc., besitzen. Diese Bezeichnungen können ebenfalls als Fahrzeug-ID verwendet werden, da die Funkmodule fest in den Fahrzeugen installiert sein können. In einer Ausführungsform verknüpfen die Fahrzeugmodule die Orts- und Zeitdaten vor der Übermittlung an das System mit den jeweiligen Fahrzeug-IDs. Damit sind alle fahrzeugbezogenen Orts- und Zeitdaten eindeutig einem Fahrzeug zuzuordnen. Die Übermittlung der fahrzeugbezogenen Orts- und Zeitdaten sowie der terminalbezogene Orts- und Zeitdaten an das System können an verschiedene Komponenten im System erfolgen. Beispielsweise können die Daten von dafür vorgesehenen Empfangskomponenten empfangen und an die weiterverarbeitenden Komponenten im System über entsprechende Datenverbindungen weitergeleitet werden. In einer Ausführungsform können die Daten beispielsweise auch vom Analyseserver empfangen oder direkt an ihn weitergeleiitet werden.

Das im System benötigte Mobilfunknetz kann jedes geeignete Mobilfunknetz, beispielweise eines der bekannten Mobiltelefonnetze, sein. Solche Netze besitzen in der Regel eine Vielzahl an Servern, von denen einer der Server als Netzwerkserver mit dem oder den Datenspeichern verbunden ist. Die mobilen Terminals können beispielsweise handelsübliche Mobilfunkgeräte sein, sofern sie zur Kommunikation in dem Mobilfunknetz geeignet sind. Solche mobilen Terminals besitzen eine individuelle Kennung, damit sie in den Mobilfunknetzen eindeutig zugeordnet und für eine Kommunikation angesprochen werden können. Die Terminal-ID der vorliegenden Erfindung kann dabei die individuelle Telefonnummer (MSISDN, IMEI) des mobilen Terminals oder eine andere individuelle Netzkennung des jeweiligen mobilen Terminals im Mobilfunknetz sein (beispielsweise IMSI). Netzwerkortung von mobilen Terminals ist dem Fachmann bekannt. Insofern kann der Fachmann die geeignete Technik wählen, um im Mobilfunknetz terminalbezogene Orts- und Zeitdaten zu erhalten. Diese werden dann inklusive Terminal-ID an das System in geeigneter Weise, beispielsweise über eine drahtlose Datenleitung, übermittelt. Die Zeitdaten in den fahrzeugbezogenen und terminalbezogenen Orts- und Zeitdaten können beispielsweise als Zeitstempel vorliegen. Die Orts- und Zeitdaten können periodisch erhoben und/oder übertragen werden, gegebenenfalls nur in einem bestimmten Zeitintervall. Die Periode (Frequenz), mit der die Daten erhoben und/oder übertragen werden, kann für verschiedene Anwendungen oder Betriebsmodi unterschiedlich sein (beispielsweise können Orts- und Zeitdaten auf dem Terminal gespeichert und nach Beendigung der Fahrt gebündelte übertragen werden).

Der oder die Datenspeicher können jede geeignete Art von Datenspeichern sein. Die Datenspeicher können beispilsweise an verschiedenen Positionen im System angeordnet sein oder als gemeinsamer Datenspeicher an einer Position im System angeordnet sein. Der oder die Datenspeicher können beispielsweise eine oder meherere Datenbanken sein. Der oder die Datenspeicher können beispielsweise auch in einem oder mehreren Servern angeordnet sein. Im Beispiel einer Datenbank als Datenspeicher zur Speicherung der fahrzeugbezogenen und terminalbezogenen Orts- und Zeitdaten sowie der Personendaten der den Terminal-IDs zugeordneten Nutzern kann die Datenbank jede dafür geeignete Datenbank sein. Die Datenbank kann dabei als separate Komponente im System ausgeführt sein oder Teil des Analyseservers oder eines anderen im System verwendeten Servers sein. Die Ermittlung der individuellen Fahr- und Bewegungsrouten aus den jeweilige Orts- und Zeitdaten kann von einer entsprechenden Software vorgenommen werden. Beispielsweise werden die Zwischenräume zwischen den gemessenen Ortsdaten linear interpoliert. Die daraus resultierende Strecke ist dann die ermittelte Fahrt- beziehungsweise Bewegungsroute. Da sich Fahrzeuge in der Regel auf bekannte Straßen bewegen, kann die Interpolation zwischen den gemessenen Ortsdaten auch mit vorhandenem Kartenmaterial so verknüpft werden, dass die interpolierten Strecken entlang von befahrbaren Wegen oder Straßen verlaufen. Die Ermittlung der Fahrt- beziehungsweise Bewegungsrouten kann in derselben Komponente des Systems oder in getrennten Komponenten des Systems, beispielsweise eine Komponente für die Ermittlung der Fahrtroute und eine andere Komponente für die Ermittlung der Bewegungsroute stattfinden. In einer Ausführungsform wird die Ermittlung aller Routen durch den Analyseserver durchgeführt.

Der Analyseserver vergleicht die ermittelten individuellen Fahrtrouten mit den ermittelten Bewegungsrouten. Hierbei werden neben den Ortsdaten auch die Zeitdaten verwendet. Da sich ein Nutzer nur dann im Fahrzeug befinden kann, wenn er nicht nur irgendwann am gleichen Ort, sondern zur gleichen Zeit am gleichen Ort des Fahrzeugs ist. Eine Zuordnung eines Nutzers zu einem Fahrzeug kann auch erfolgen, wenn es für ihn zumindest in einem zeitlichen Intervall eine hinreichende zeitliche und örtliche Übereinstimmung seiner individuellen Bewegungsroute mit der des Fahrzeugs gibt. Damit die Übereinstimmung hinreichend für eine Zuordnung ist, müssen sich die Fahrt- und Bewegungsrouten in einem nicht zu kleinen Zeitintervall decken, andernfalls liegt nur eine zufällige Begegnung vor, ohne dass sich der Nutzer zu der entsprechenden Bewegungsroute temporär im Fahrzeug befunden hat. Da die Orts- und Zeitdaten in der Regel als disktrete Orts-Zeit-Punkte vorliegen, kann zur Routenermittlung zwischen den Punkten interpoliert werden. Da die Orts-Zeit-Punkte für die Fahrtrouten und die Bewegungsrouten in der Regel zu unterschiedlichen Zeitpunkten gemessen werden, decken sich die interpolierten Strecken in der Regel nicht vollständig. Daher wird für die jeweiligen zu testenden Kombinationen aus Fahrtroute und Bewegungsroute eine Wahrscheinlichkeit für die Übereinstimmung, auch als Grad der Übereinstimmung bezeichnet, ermittelt. Liegt die Wahrscheinlichkeit (Grad der Übereinstimmung) oberhalb eines festgelegten Wertes (Schwellenwert), so wird dies als hinreichende Übereinstimmung im System interpretiert. Im System ist ein Schwellenwert für eine hinreichende Übereinstimmung definiert. Die Übereinstimmung ist nur hinreichend, wenn der ermittelte Grad der Übereinstimmung oberhalb des Schwellenwertes liegt. Die Definition des Schwellenwertes kann je nach Anzahl der Nutzer und Fahrzeuge im System angepasst werden. Für den Grad der Übereinstimmung wird dabei die zeitliche und örtliche Übereinstimmung von Start- und Endpunkte der individuellen Fahrtroute und den damit zu vergleichenden individuellen Bewegungsrouten mit einer höheren Gewichtung berücksichtigt als Punkte der Fahrt- und Bewegungsrouten zwischen den Start- und Endpunkten. Dies entspricht beispielsweise dem Grundsatz, dass ein Nutzer des Fahrzeugs die gesamte Strecke im Fahrzeug sitzen muss, um als Fahrer des Fahrzeugs gelten zu können.

Sobald der Analsysserver für eine bestimmte Kombination aus Fahrtrouten und Bewegungsrouten eine hinreichende Übereinstimmung festgestellt hat, verknüpft der Analyseserver die betreffende Fahrzeug-ID mit der zu diesen individuellen Bewegungsrouten gehörigen Terminal-ID und speichert die Verknüpfung in dem oder den Datenspeichern zusammen mit den Personendaten der den Terminal-IDs zugeordneten Nutzern ab. Dazu brauchen vorher nicht die Personendaten aus dem Datenspeicher in den Analyseserver extrahiert zu werden. In dem oder den Datenspeichern könnten die Verknüpfungen mit den entsprechenden Datensätzen, umfassend Persondaten und Terminal-ID, verlinkt werden. Es könnte auch ein zusätzlicher Datensatz aus Verknüpfung und Personendaten in dem oder den Datenspeichern hergestellt werden.

In einer Ausführungsform umfasst das System einen zumindest mit dem oder den Datenspeichern verbundenen Fahrzeugserver, auf dem zumindest die für das mindestens eine Fahrzeug zugelassenen Fahrer und/oder Mitfahrer gespeichert sind. Damit kann das System bereits bestehende technische Infrastruktur ohne grundlegende Änderungen übernehmen, da diese Daten weiterhin dezentral vorgehalten werden können, ohne dabei die Funktionalität des Systems zu beeinflussen.

In einer Ausführungsform übermittelt das Fahrzeugmodul die Orts- und Zeitdaten an den Fahrzeugserver und die individuelle Fahrtroute des mindestens einen Fahrzeuges wird durch den Fahrzeugserver bestimmt. Somit kann die eventuell bereits bei manchen Teilnehmern am System vorhandene lokale Ortsüberwachung der Fahrzeuge weiter betrieben und im System verwendet werden. Beispielsweise kann der Fahrzeugserver die bereits ermittelten Fahrtrouten übermitteln, so dass der Analyseserver für den durchzuführenden Vergleich lediglich die Bewegungsrouten ermitteln muss.

In einer Ausführungsform ist der Fahrzeugserver dazu ausgestaltet, die dem mindestens einen Fahrzeug mittels des Analyseservers zugeordneten Nutzer mit den für dieses Fahrzeug zugelassenen Fahrern und/oder Mitfahrern zu vergleichen, das Ergebnis des Vergleichs zu speichern und im Falle einer Übereinstimmung lediglich eines der zugeordneten Nutzer mit einem der zugelassenen Fahrer und/oder Mitfahrer für das Fahrzeug diesen einen Nutzer als den Fahrer dieses Fahrzeugs zu indizieren. Sind mehrere Personen oder Nutzer als Fahrer für ein Fahrzeug zugelassen, so sind diese Personen oder Nutzer gleichermaßen entweder Fahrer oder Mitfahrer. Der Vergleich der Routen im Analyseserver kann einen eindeutigen Fahrer identifizieren. Es könnte aber auch sein, dass zwei zugelassene Personen die gesamte Fahrtroute zusammen im Fahrzeug sitzen, so dass der aus dem Wahrscheinlichkeitsvergleich ermittelte Fahrer möglicherweise nur der Mitfahrer ist. Sollte eine eindeutige Bestimmung des Fahrers notwendig sein, müssten beide Nutzer befragt werden. Bei einer Übereinstimmung lediglich eines der zugeordneten Nutzer mit einem der zugelassenen Fahrer und/oder Mitfahrer für dieses Fahrzeug kann das erfindungsgemäße System somit für ein Fahrzeug automatisch und eindeutig einen Fahrer identifizieren.

In einer weiteren Ausführungsform ist der Fahrzeugserver dazu vorgesehen, im Falle keiner Übereinstimmung zwischen zugeordneten Nutzern und zugelassenen Fahrern und/oder Mitfahrern oder keiner hinreichenden Übereinstimmung mit individuellen Bewegungsrouten für dieses Fahrzeug ein erstes Alarmsignal an das System auszusenden. In beiden Fällen fährt ein nichtbefugter Nutzer (Person) das Fahrzeug. Im ersten Fall können zumindest im System bekannte Personen ermittelt werden, die somit von den Systembetreibern auf ihr Verhalten angesprochen werden können. Die Systembetreiber können damit auf einfache und schnelle technische Weise feststellen, ob sich die Nutzer der Fahrzeuge an die vereinbarten Regeln halten. Im zweiten Fall könnte sogar ein Fahrzeugdiebstahl vorliegen. Da in beiden Fällen ein nicht beabsichtigtes Verhalten vorliegt, werden die Systembetreiber mit dem ersten Alarmsignal automatisch auf dieses Verhalten aufmerksam gemacht und können entsprechende weitere Schritte zeitnah einleiten. Im Falle eines Diebstahls braucht nicht mehr auf die Anzeige des zugelassenen Fahrers oder Mitfahrers gewartet zu werden, da die Information durch das erfindungsgemäße System direkt dem Systembetreiber ohne Zutun weiterer Personen vorliegt. Der Zeitgewinn kann für die erfolgreiche Ergreifung des Diebes verwendet werden.

In einer weiteren Ausführungsform ist der Fahrzeugserver dazu vorgesehen, im Falle mehrerer Übereinstimmungen zwischen zugeordneten Nutzern und zugelassenen Fahrern und/oder Mitfahrern für dieses Fahrzeug den Nutzer als Fahrer zu indizieren, dessen individuelle Bewegungsroute die größte Übereinstimmung mit der individuellen Fahrtroute für das Fahrzeug besitzt. Somit kann durch die Indizierung dokumentiert werden, dass sich zumindest ein zugelassener Fahrer im Fahrzeug befunden hat.

In einer Ausführungsform ist das Mobilfunknetz dazu ausgestaltet, die Übermittlung von terminalbezogenen Orts- und Zeitdaten von den mobilen Terminals an den Netzwerkserver zu triggern, beispielsweise durch Paging oder den Versand von sogenannten stillen SMS. Durch die Triggerung durch das Mobilfunknetz wird sichergestellt, dass eine ausreichende Datenmenge an Orts- und Zeitdaten zur Ermittlung einer Bewegungsroute vorliegt. Die Periode der Benachrichtigungen kann dabei beispielsweise unter einer Minute, zwischen einer und fünf Minuten oder zwischen einer und zehn Minuten liegen, um eine genaue Bewegungsroute ermitteln zu können.

In einer alternativen Ausführungsform ist auf dem mobilen Terminal eine Applikation installiert, die die Übermittlung von terminalbezogene Orts- und Zeitdaten an den Netzwerkserver triggert. Damit kann der einzelne Nutzer das Zeitintervall zwischen den einzelnen Ortsmessungen selber bestimmen und gegebenenfalls für eine genauere Ermittlung der Bewegungsroute eine kürzere Messperiode einstellen. Außerdem erfolgt die Ortsmessung unabhängig von den Gegenbenheiten im jeweiligen Mobilfunknetz. Alternativ kann das Triggern auch über den Nutzer manuell erfolgen, beispielsweise über einen aktiven Versand von SMS oder durch Telefonanrufe. Diese Daten können natürlich auch zu den anderen regelmäßig gewonnenen Ortsdaten hinzugefügt werden. Die Zeitdaten können als sogenannte Zeitstempel vorliegen.

In einer Ausführungsform ist das Fahrzeugmodul mit einer Motorsteuerung des Fahrzeugs verbunden und übermittelt die fahrzeugbezogenen Orts- und Zeitdaten nur wähernd des Betriebs des Motors. In einer alternativen Ausführungsform ist das Fahrzeugmodul in geeigneter Weise mit der Autobatterie verbunden, so dass ein Starten oder Beenden einer Fahrt durch Überwachen der Autobatteriespannung detektiert wird. Beim Starten des Motors beginnt dann beispielsweise die Übertragung der fahrzeugbezogenen Orts- und Zeitdaten an den Fahrzeug- oder Analyseserver. Beim Abschalten des Motors endet die Übertragung der fahrzeugbezogenen Orts- und Zeitdaten an den Fahrzeug- oder Analyseserver. Dadurch wird einerseits der Datenverkehr und die zu verarbeitende Datenmenge begrenzt und andererseits vereinfacht diese Ausführungsform die Analyse durch den Analyseserver, da Daten zu Bewegungsrouten in Stillstandszeiten des Fahrzeugs nicht berücksichtigt werden müssen.

In einer Ausführungsform werden Fahrdaten aus den fahrzeugbezogenen Orts- und Zeitdaten gewonnen und/oder das Fahrzeug ist mit einem oder mehreren Fahrsensoren, vorzugsweise Beschleunigungssensoren, ausgestattet, die die Fahrdaten an das Fahrzeugmodul senden und das Fahrzeugmodul diese Fahrdaten zusammen mit den zugehörigen Orts- und Zeitdaten an das System übermittelt. Die Fahrdaten oder ein Teil der Fahrdaten können auch in Ergänzung zu den Fahrdaten der Fahrsensoren aus den GPS-Daten gewonnen werden, welche bereits als fahrzeugbezogene Orts- und Zeitdaten vorliegen. Durch die übermittelten Fahrdaten können die Systembetreiber beispielsweise kontrollieren, ob die Fahrweise eines Fahrers als riskant, gefährlich oder unsicher einzuschätzen ist. Beispielsweise können über die Fahrtroute die vorgeschriebenen Höchstgeschwindigkeiten ermittelt und mit den Fahrdaten verglichen werden. Bei zu schnellem Fahren, zu starkem Beschleunigen oder Abbremsen kann der Fahrer somit auf seine Fahrweise aufmerksam gemacht werden. Die übermittelten Fahrdaten können auch mit vorhandenem Kartenmaterial verknüpft werden, um so eine noch aussagekräftigere Einschätzung der Fahrweise des Fahrers zu ermöglichen. So kann beispielsweise eine hohe oder erhöhte Geschwindigkeit an typischen Gefahrenstellen im Straßenverkehr oder beispielsweise im kurvigen Gelände als eine stark riskante Fahrweise eingeschätzt werden. Ob eine Geschwindigkeit auf einem bestimmten Straßen - oder Wegeabschnitt erhöht ist, kann beispielsweise durch einen Abgleich mit dem für den betreffenden Straßen - oder Wegeabschnitt am Analyse- oder Fahrzeugserver hinterlegten Geschwindigkeitsbegrenzungen bestimmt werden. Zu dem Kartenmaterial können also die für die einzelnen Straßen- bzw. Wegstrecken gültigen Geschwindigkeitsbegrenzungen hinterlegt sein und für eine Einschätzung der Fahrweise des Fahrers unter Verwendung und/ oder dem Abgleich mit den ermittelten fahrzeugbezogenen Orts- und Zeitdaten herangezogen werden.

In einem anderen Ausführungsbeispiel kann beispielsweise bei längeren Fahrten auch festgestellt werden, ob ein bestimmter Fahrer wünschenswerte und/oder vorgeschriebene Ruhepausen während der Fahrt einhält. Die übermittelten Zeitdaten bzw. die Fahrzeit und die Fahreridentität kann mit einer vorzugebenden maximalen Fahrzeit verglichen werden und bei Überschreitung vom Analyseserver oder Fahrzeugserver Warnhinweise an vorbestimmte Nutzer, beispielsweise dem Fahrer oder anderen registrierten Nutzern des Systems übermittelt werden.

In einer weiteren Ausführungsform ist/sind der Analyseserver und/oder der Fahrzeugserver dazu ausgestaltet sind, die Fahrdaten dem als Fahrer identifizierten Nutzer zuzuordnen, die Fahrdaten für alle Fahrten dieses Nutzers zu akkumulieren, aus den akkumulierten Fahrdaten ein spezifisches Fahrverhalten für den Nutzer zu bestimmen und das spezifische Fahrverhalten zur Identifizierung eines bestimmten Nutzers als der Fahrer aus einer Gruppe von mehreren Nutzern welche mögliche Fahrer sein könnten und/oder zur Verifizierung der Identifikation eines der Nutzer als der Fahrer zu verwenden. Das System ist somit ein selbstlernendes System, das die Datenbasis zur Bestimmung eines nutzerspezifischen Fahrverhaltens selbständig erweitert und aktualisiert, wodurch eine genauere Identifikation eines Nutzers als der Fahrer bei mehreren Nutzern als mögliche Fahrer aufgrund ähnlicher Korrelationen z.B. ihrer Bewegungsrouten mit der Fahrroute oder aufgrund ihres charakteristischen Fahrverhaltens, ermöglicht wird. Die Akkumulierung der Fahrdaten, das Bestimmen eines charakteristischen Fahrverhaltens aus den akkumulierten Fahrdaten und der Vergleich zwischen Fahrverhalten und einzelnen Fahrdaten kann von verschiedenen Komponenten des Systems durchgeführt werden.

Die Erfindung betrifft des Weiteren ein Verfahren zum Betreiben des Systems gemäß der vorliegenden Erfindung umfassend mindestens ein Fahrzeug mit einer zugeordneten individuelle Fahrzeug-ID und mit einem Fahrzeugmodul, mindestens ein Mobilfunknetz mit einem Netzwerkserver und mehreren mobilen Terminals geeignet zur Kommunikation zumindest in dem Mobilfunknetz, ein oder mehrere Datenspeicher und einen Analyseserver, umfassend die Schritte
- Registrieren von zugelassenen Fahrern und/oder Mitfahrer im System mit Personendaten und Terminal-IDs für die mobilen Terimals der Fahrer und/oder Mitfahrer,
- Übermitteln von fahrzeugbezogenen Orts- und Zeitdaten an das System durch das Fahrzeugmodul,
- Übermitteln von terminalbezogene Orts- und Zeitdaten durch den Netzwerkserver an das System, wobei den jeweiligen mobilen Terminals individuelle Terminal-IDs zugeordnet sind und die Nutzer der mobilen Terminals anhand der individuellen Terminal-IDs identifiziert werden können,
- Speichern der fahrzeugbezogenen Orts- und Zeitdaten zusammen mit der Fahrzeug-ID für das zumindest eine Fahrzeug und Speichern der terminalbezogenen Orts- und Zeitdaten zusammen mit den Terminal-IDs sowie der Personendaten der den Terminal-IDs zugeordneten Nutzern für jedes der mobilen Terminals in ein oder mehreren Datenspeichern,
- Ermittlung der individuellen Fahrtroute und individueller personenbezogener Bewegungsrouten aus den gespeicherten fahrzeugbezogenen Orts- und Zeitdaten und terminalbezogenen Orts- und Zeitdaten,
- Vergleichen der ermittelten individuellen Fahrtroute mit den ermittelten Bewegungsrouten in einem Analyseserver,
- Verknüpfen der Fahrzeug-ID des zumindest einen Fahrzeug mit ein oder mehreren Terminal-IDs bei einer zumindest in einem zeitlichen Intervall hinreichenden Übereinstimmung der zu der Fahrzeug-ID zugehörigen individuellen Fahrtroute mit den zu den ein oder mehreren Terminal-IDs zugehörigen individuellen Bewegungsrouten wobei die Übereinstimmung nur hinreichend (U-FT) ist, wenn der Grad der Übereinstimmung oberhalb eines definierten Schwellenwertes (SW) liegt und für den Grad der Übereinstimmung die zeitliche und örtliche Übereinstimmung von Start- und Endpunkte (SP, EP) der individuellen Fahrtroute (FR) und den damit zu vergleichenden individuellen Bewegungsrouten (TR, TR1, TR2, TR3, TR4) mit einer höheren Gewichtung berücksichtigt wird als Punkte (P1, P2, P3) der Fahrt- und Bewegungsrouten (FR, TR) zwischen den Start- und Endpunkten (SP, EP), und
- Abspeichern der Verknüpfung der Fahrzeug-ID mit den Terminal-IDs zusammen mit den Personendaten der den Terminal-IDs zugeordneten Nutzern in dem oder den Datenspeichern.

Der Schritt des Registrierens kann dazu dienen, die Korrelation zwischen Personendaten von Fahrern und Mitfahren und deren Terminal-IDs herzustellen. Die Bewegungsrouten von Terminals, die keiner Person zugeordnet werden können, sind für die Überprüfung der Personen in einem Fahrzeug wertlos.

In einer Ausführungsform des Verfahrens umfasst dieses die weiteren Schritte
- Abspeichern zugelassener Fahrer und/oder Mitfahrer für das zumindest eine Fahrzeug in einem Fahrzeugserver, der zumindest mit dem oder den Datenspeichern verbunden ist,
- Vergleichen der mittels des Analyseservers zugeordneten Nutzer dieses Fahrzeuges mit den für diese Fahrzeug zugelassenen Fahrern und/oder Mitfahrern, und
- Speichern des Ergebnissses des Vergleichs.

In einer weiteren Ausführungsform des Verfahrens umfasst dieses die weiteren Schritte
- im Falle einer Übereinstimmung lediglich eines der zugeordneten Nutzer mit einem der zugelassenen Fahrer und/oder Mitfahrer für dieses Fahrzeug Indizieren dieses einen Nutzers als der Fahrer dieses Fahrzeugs durch den Fahrzeugserver,
- im Falle keiner Übereinstimmung zwischen zugeordneten Nutzern und zugelassenen Fahrern und/oder Mitfahrern oder keiner hinreichenden Übereinstimmung mit individuellen Bewegungsrouten für dieses Fahrzeug Aussenden eines ersten Alarmsignals an das System oder
- im Falle mehrerer Übereinstimmungen zwischen zugeordneten Nutzern und zugelassenen Fahrern und/oder Mitfahrern für dieses Fahrzeug Indizieren des Nutzers als der Fahrer dieses Fahrzeugs, dessen individuelle Bewegungsroute die größte Übereinstimmung mit der individuellen Fahrtrouten für das Fahrzeug besitzt.

Das Indizieren kann auf jede geeignete Weise erfolgen. Beispielsweise kann der Datensatz des zugelassenen Fahrers oder der des entsprechenden Nutzers geeignet markiert werden, durch Setzen einer Flagge, durch Hinzufügen des betreffenden Zeitraums, in der eine Übereinstimmung zwischen Fahrtroute und Bewegungsroute festgestellt wurde oder durch Erstellen eines neuen Datensatzes, in dem die indizierten Fahrer für die entsprechenden Fahrzeuge und Fahrzeiten aufgelistet sind.

In einer weiteren Ausführungsform des Verfahren, wobei das Fahrzeug mit einem oder mehreren Fahrsensoren, vorzugsweise Beschleunigungssensoren, ausgestattet ist, die Fahrdaten an das Fahrzeugmodul senden und das Fahrzeugmodul übermittelt diese Fahrdaten dann zusammen mit den zugehörigen Orts- und Zeitdaten an das System, umfasst dieses die weiteren Schritte
- Analysieren der Fahrdaten im Fahrzeugsserver oder Analyseserver auf Überschreitung von vorher festgelegten Höchstwerten und
- Zuordnen der Fahrdaten und gegebenenfalls der Höchstwert-Überschreitungen zu dem für dieses Fahrzeug indizierten Fahrer.

In einer weiteren Ausführungsform umfasst das Verfahren die weiteren Schritte:
- Analysieren der Fahrdaten im Fahrzeugsserver oder Analyseserver, und
- Zuordnen der Fahrdaten zu dem für dieses Fahrzeug indizierten Fahrer.

In einer bevorzugten Ausführungsform umfasst das Verfahren die weiteren Schritte, dass die zugeordneten Fahrdaten für den identifizierten Nutzer als der Fahrer für alle Fahrten dieses Nutzers akkumuliert werden und aus den akkumulierten Fahrdaten ein spezifisches Fahrverhalten für den identifizierten Nutzer bestimmt wird, wobei das spezifische Fahrverhalten zur Identifizierung eines der Nutzer als Fahrer (bei mehreren Nutzern als mögliche Fahrer) und/oder zur Verifizierung der Identifikation eines der Nutzer als der Fahrer verwendet wird. Beispielsweise können diese Prozesse im Fahrzeugserver und/oder im Analyseserver durchgeführt werden. Die obigen Verfahrensschritte können auch in umgekehrter Reihenfolge ausgeführt werden. Die Fahrdaten können dabei beispielsweise aus den fahrzeugbezogenen Orts- und Zeitdaten gewonnen werden. Alternativ oder in Ergänzung kann das Fahrzeug auch mit einem oder mehreren Fahrsensoren, beispielsweise Beschleunigungssensoren, ausgestattet sein, die die Fahrdaten an das Fahrzeugmodul senden und das Fahrzeugmodul diese Fahrdaten zusammen mit den zugehörigen Orts- und Zeitdaten an das System übermittelt.

Die Analyse der Fahrdaten kann dabei auch eine Prüfung auf Überschreitung von vorher festgelegten Höchstwerten umfassen, welche dem identifizierten Fahrer ebenfalls zugeordnet werden. In einer bevorzugten Ausführungsform ist einer der Höchstwerte eine maximale negative Beschleunigung, wobei der Fahrzeugserver bei Überschreiten dieser maximalen negativen Beschleunigung ein zweites Alarmsignal an das System aussendet, wobei das zweite Alarmsignal die diesem Fahrzeug zugeordneten Nutzer und gegebenenfalls den indizierten Fahrer umfasst. Die Höchstwerte negativer Beschleunigungen können beispielsweise denen für die Auslösung von Airbags in Fahrzeugen entsprechen. Diese negativen Beschleunigungen können als Unfallsituation interpretiert werden. Somit kann bei einer Feststellung eines entsprechenden Beschleunigungswertes ein Unfall des Fahrzeugs detektiert werden. Aufgrund der vorliegenden Erfindung ist der Systembetreiber infolge des erhaltenen zweiten Alarmsignals in der Lage, geeignete Rettungsdienste oder Polizeistellen für weitere Sicherungs- und Rettungsmaßnahmen zu informieren. Zusätzlich kann aufgrund des erfindungsgemäßen Systems den Rettungsdiensten zusätzliche Informationen, wie beispielsweise die Anzahl an Personen (entspricht der Anzahl der zugeordneten Nutzer zu dieser Fahrtroute) im Fahrzeug und die Identität des Fahrers, für dieses Fahrzeug genannt werden.

### Kurze Beschreibung der Abbildungen

Diese und andere Aspekte der Erfindung werden im Detail in den Abbildungen wie folgt gezeigt.
- Fig.1:: eine Ausführungsform des erfindungsgemäßen Systems.
- Fig.2:: eine Ausführungsform der fahrzeug- und terminalbezogenen Orts- und Zeitdaten.
- Fig.3:: eine Darstellung des Vergleichs zwischen den Fahrtrouten und den Bewegungsrouten durch den Analyseserver.
- Fig.4:: eine Ausführungsform des erfindungsgemäßen Verfahrens.
- Fig.5:: eine weitere Ausführungsform der Identifizierung des Fahrers eines Fahrzeugs im Rahmen des erfindungsgemäßen Verfahrens.
- Fig.6:: eine weitere Ausführungsform der Auswertung der Fahrdaten im Rahmen des erfindungsgemäßen Verfahrens.
- Fig.7:: eine weitere Ausführungsform der Auswertung der Fahrdaten im Rahmen des erfindungsgemäßen Verfahrens.
- Fig.8:: eine weitere Ausführungsform der Identifizierung des Fahrers aufgrund der Fahrdaten im Rahmen des erfindungsgemäßen Verfahrens.

### Detaillierte Beschreibung der Ausführungsbeispiele

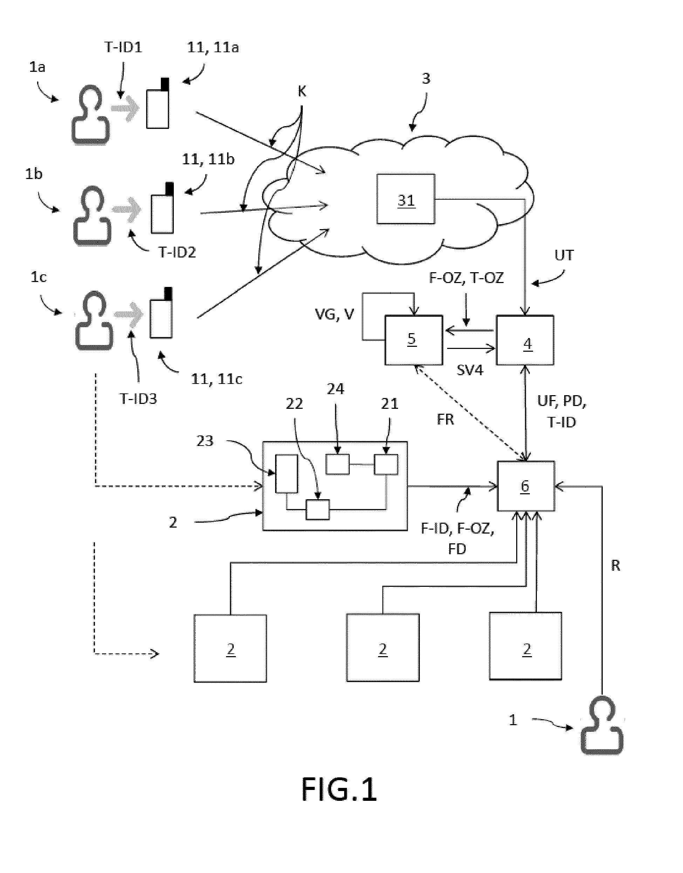

Fig. 1 zeigt eine Ausführungsform des erfindungsgemäßen Systems. Das System umfasst mehrere Fahrzeuge 2, von denen ein Fahrzeug 2 detaillierter mit einigen Komponenten dargestellt ist. Den Fahrzeugen 2 sind zur Kennung im System individuelle Fahrzeug-IDs zugeordnet. Die Fahrzeuge 2 sind mit einem Fahrzeugmodul 21 zur drahtlosen Übermittlung von fahrzeugbezogenen Orts- und Zeitdaten F-OZ an das System ausgestattet. In dieser Ausführungsform erfolgt die Übermittlung der Orts- und Zeitdaten F-OZ an den Fahrzeugserver 6. Die Fahrzeugmodule 21 verknüpfen hier die Orts- und Zeitdaten F-OZ vor der Übermittlung an den Fahrzeugserver 6 mit den jeweiligen Fahrzeug-IDs F-ID, indem die Fahrzeugmodule 21 in dem Kommunikationsnetz zum Fahrzeugserver 6 eine eindeutige Bezeichnung besitzen. Das Fahrzeugmodul kann beispielsweise ein M2M-Kommunikationsmodul mit optionalem Satallitennavigationsempfänger (beispielsweise GPS) sein, ein Navigationsgerät, oder ein Funkmodul sein, dessen Position über bekannte Techniken in einem Mobilfunknetz geortet werden kann und gegebenenfalls als Nachrüstgerät in das jeweilige Fahrzeug installiert werden. Das M2M-Gerät besitzt beispielsweise ein Mobilfunkmodul, ein Beschleunigungssensor und ein GPS Ortungsmodul. Die fahrzeugbezogenen Orts- und Zeitdaten F-OZ werden beispielsweise mit GPS oder über eine Cell-ID des Mobilfinknetzes erfasst und anschließend über das Mobilfunkmodul an den Car Server übertragen. Die Übertragung kann beispielsweise über eine IP-Verbindung via GPRS, über SMS oder, wie beim E-Call mit einem In-band-Modem erfolgen. Der Beschleunigungssensor wird für eine Zuordnung Fahrzeug - Nutzer nicht unbedingt benötigt, kann aber für die Identifizierung zusätzlicher Daten verwendet werden und damit Anhaltspunkte für eine Identifizierung des Fahrers liefern. Das Fahrzeugmodul kann des Weiteren eine On-board-Diagonstic- (OBD) Schnittstelle umfassen und als M2M-Gerät beispielsweise in einen OBD-Diagnosestecker im Fahrzeug eingesetzt werden.

Das Fahrzeugmodul kann in einem Kommunikationsnetz eine eindeutige Bezeichnung, beispielsweise IMSI, MSISDN, sip adr, etc., besitzen. Diese Bezeichnungen können ebenfalls als Fahrzeug-ID verwendet werden, da die Funkmodule fest in den Fahrzeugen installiert sein können. In einer Ausführungsform verknüpfen die Fahrzeugmodule die Orts- und Zeitdaten vor der Übermittlung an das System mit den jeweiligen Fahrzeug-IDs. Alternativ können die fahrzeugbezogenen Orts- und Zeitdaten F-OZ im Fahrzeugmodul 21 gespeichert und nach Beendigung der Fahrt an das System übermittelt oder übertragen werden.

In dieser Ausführungsform ist das Fahzeugmodul 21 zusätzlich mit einer Motorsteuerung 22 des Fahrzeugs 2 verbunden, damit die fahrzeugbezogenen Orts- und Zeitdaten F-OZ nur während des Betriebs des Motors 23 an den Fahrzeugserver 6 übermittelt werden. Alternativ kann das Fahrzeugmodul 21 beispielsweise auch in geeigneter Weise mit der Autobatterie verbunden sein, so dass ein Starten oder Beenden einer Fahrt durch Überwachen der Autobatteriespannung detektiert wird. Denkbar sind auch andere Detektionsmöglichkeiten, um ein Starten oder Beenden einer Fahrt festzustellen, wie z.B. mit Hilfe eines Beschleunigungssensors.

Hiermit wird die Überwachung des Fahrzeugs 2 zur Feststellung des Fahrers F auf die Zeit begrenzt, in der sich tatsächlich ein Fahrer F im Fahrzeug 2 befindet. In dieser Ausführungsform besitzt das Fahrzeug 2 zusätzlich einen oder mehrere Fahrsensoren 24, vorzugsweise Beschleunigungssensoren 24, die Fahrdaten FD beim Betrieb des Fahrzeugs an das Fahrzeugmodul 21 senden und das Fahrzeugmodul 21 diese Fahrdaten FD zusammen mit den zugehörigen Orts- und Zeitdaten F-OZ an den Fahrzeugserver 6 übermittelt. Hiermit kann die Fahrweise des Fahrers F oder gegebenenfalls auftretende Gefahrensituationen automatisch erkannt und entsprechende Maßnahmen von den Systembetreibern eingeleitet werden. Des Weiteren sind mehrere mobile Terimals 11, hier beispielhaft mit drei mobilen Terminals 11 a, 11 b, 11 c dargestellt, in einem Mobilfunknetz 3 unter anderem mit einem Netzwerkserver 31 verbunden. Die jeweiligen mobilen Terminals 11 a, 11 b, 11 c sind anhand individueller Terminal-IDs T-ID1, T-ID2, T-ID3 eindeutig den Nutzern 1 a, 1 b, 1 c dieser mobilen Terminals 11 a, 11 b, 11 c zugeordnet. Anhand der Terminal-IDs T-ID1, T-ID2, T-ID3 können somit die Nutzer 1 a, 1 b, 1 c identifiziert werden. Die Lokalisierung von mobilen Terminals 11 in einem Mobilfunknetz 3 ist bereits bekannte Technologie. Die terminalbezogenen Orts- und Zeitdaten T-OZ können beispielsweise dadurch gewonnen werden, dass das Mobilfunknetz (3) die Übermittlung K von terminalbezogene Orts- und Zeitdaten T-OZ von den mobilen Terminals 11a, 11b, 11 c an den Netzwerkserver 31 triggert. Alternativ dazu könnte auch auf dem mobilen Terminals 11 eine Applikation installiert sein, die die Übermittlung K von terminalbezogenen Orts- und Zeitdaten T-OZ an den Netzwerkserver 31 triggert. Das mobile Terminal 11 kann die terminalbezogenen Orts- und Zeitdaten T-OZ beispielsweise via IP-Connection, SMS-Versand oder In-band-Modem an das System bzw. eine Komponente des Systems, also z.B. den Fahrzeugserver, den Analysserver, den Netzwerkserver oder die Datenbank übermitteln. Die terminalbezogenen Orts- und Zeitdaten T-OZ können dabei auch aus GPS-Daten oder Cell-ID-Daten gewonnen werden.

Die terminalbezogenen Orts- und Zeitdaten T-OZ können auch durch anderweitigen Gebrauch des mobilen Terminals gewonnen werden. Dient beispielsweise ein Mobiltelefon als mobiles Terminal, können beim normalen Gebrauch des Mobiltelefons, wie beispielsweise dem Versenden von SMS, dem Telefonieren oder dem Surfen im Internet, die Orts- und Zeitdaten T-OZ übermittelt werden. Der Netzwerkserver 31 ist in dieser Ausführungsform dazu ausgestaltet, terminalbezogene Orts- und Zeitdaten T-OZ an die Datenbank 4 als den Datenspeicher in dieser Ausführungsform zu übermitteln UT. Die Datenbank 4 speichert die übermittelten fahrzeugbezogenen Orts- und Zeitdaten F-OZ zusammen mit den Fahrzeug-IDs F-ID, gegebenenfalls zur späteren Ermittlung ER individueller Fahrtrouten FR für die jeweiligen Fahrzeuge 2. Die individuellen Fahrtrouten FR der jeweiligen Fahrzeuge 2 können dabei durch den Fahrzeugserver 6 bestimmt und für die weitere Verarbeitung an den Analyseserver 5 übermittelt werden (gestrichelter Pfeil). In einer alternativen Ausführungsform kann der Analyseserver die Ermittlung ER der Fahrtrouten FR auch selber durchführen. Die Datenbank 4 speichert außerdem die terminalbezogenen Orts- und Zeitdaten T-OZ zusammen mit den Terminal-IDs T-ID, T-ID1, T-ID2, T-ID3 sowie den Personendaten PD der den Terminal-IDs T-ID, T-1D1, T-1D2, T-1D3 zugeordneten Nutzern 1, 1a, 1b, 1c zur nachfolgenden Ermittlung ER individueller personenbezogener Bewegungsrouten TR, TR1, TR2, TR3 für jedes der mobilen Terminals 1, 1 a, 1 b, 1 c. In einer alternativen Ausgestaltung könnten die individuellen Bewegungsrouten TR auch vom Netzwerkserver 31 ermittelt und an die Datenbank 4 und/oder an den Analyseserver 5 übermittelt werden. Der mit der Datenbank 4 verbundene Analyseserver 5 vergleicht VG dann die ermittelten individuellen Fahrtrouten FR mit den ermittelten individuellen Bewegungsrouten TR. Im Falle einer zumindest in einem zeitlichen Intervall hinreichenden Übereinstimmung U-FT zumindest einer der individuellen Fahrtrouten FR mit einer oder mehreren der individuellen Bewegungsrouten TR verknüpft V der Analyseserver 5 die betreffende Fahrzeug-ID F-ID mit den zu diesen individuellen Bewegungsrouten TR der entsprechenden Terminal-IDs T-ID1, T-ID2, T-ID3 und speichert SV4 diese Verknüpfung V in der Datenbank 4 zusammen mit den Personendaten PD der den Terminal-IDs T-1D1, T-1D2, T-ID3 zugeordneten Nutzern 1a, 1 b, 1 c ab. Die Korrelation zwischen Personendaten PD, wie beispielweise Name, Vorname, Anschrift, Personalausweisnummer etc., und Terminal-IDs T-ID kann durch vielerlei Datenquellen erhalten werden. In dieser Ausführungsform umfasst das System ein Portal, bei dem sich spätere Nutzer 1 registrieren R können, damit die Systembetreiber diese Nutzer als zugelassene Fahrer (F) und/oder Mitfahrer (M) einzelnen Fahrzeugen 2 zuteilen zu können. Bei der Registrierung gibt der spätere Nutzer 1 im System zumindest seine Personendaten PD und die Terminal-ID T-ID für sein mobiles Terimal 11 an. Mit dieser Information können Personendaten PD den vom Mobilfunkserver übermittelten Terminal-IDs T-ID zugeordnet werden. Das System kann in einer weiteren Ausführungsform ein Portal umfassen, mit dem die Fahrer/Mitfahrer (Nutzer) ihre und gegebenenfalls andere Fahrt- und Bewegungsrouten einsehen können.

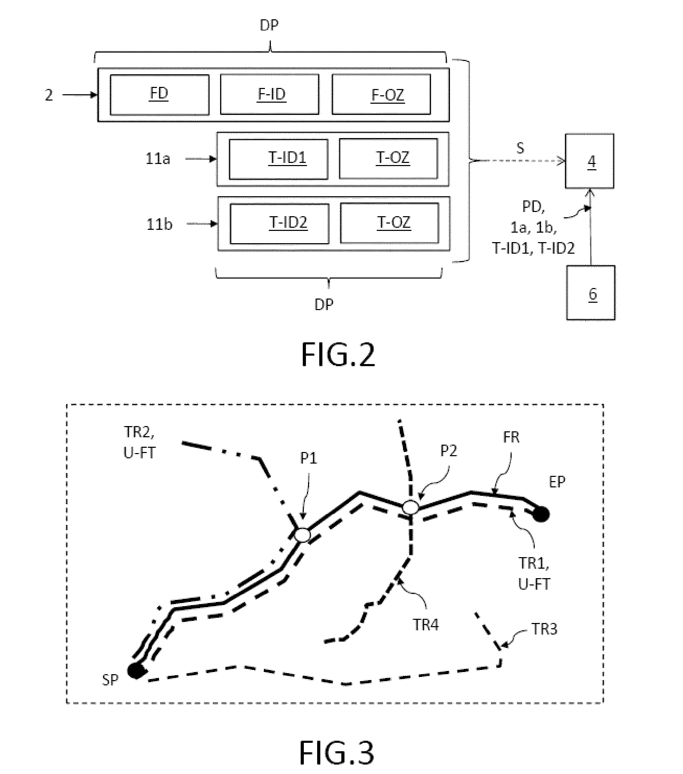

Fig.2 zeigt eine Ausführungsform, in der die fahrzeugbezogenen Orts- und Zeitdaten F-OZ zusammen mit den Fahrdaten FD und der Fahrzeug-ID sowie die terminalbezogenen Orts- und Zeitdaten T-OZ zusammen mit den Terminal IDs T-ID1, T-ID2 für die einzelnen Messpunkte jeweils als gemeinsames Datenpaket DP (oder Datensatz DP) übermittelt werden. Die Datenpakete DP für terminalbezogene Orts- und Zeitdaten T-OZ und Terminal IDs T-ID1, T-ID2 sind hier beispielsweise für ein erstes und zweites mobiles Terminal 11 a, 11 b eines ersten und zweiten Nutzers 1a, 1b dargestellt. Alternativ können die Fahrdaten FD aber auch separat von den fahrzeugbezogenen Orts- und Zeitdaten F-OZ übermittelt werden, so dass in diesem Fall das entsprechende Datenpaket DP nur die fahrzeugbezogenen Orts- und Zeitdaten F-OZ und die Fahrzeug-ID umfassen würde. In einer weiteren Ausführungsform werden beispielsweise keine Fahrdaten FD übermittelt, sondern lediglich die fahrzeugbezogenen Orts- und Zeitdaten und/oder die Fahrzeug-ID F-ID.

Fig.3 zeigt eine Darstellung, wie unterschiedliche Bewegungsrouten für eine Fahrtroute FR im Analyseserver 5 verglichen VG, ausgewertet und gegebenenfalls verknüpft V werden. Die Fahrtroute FR ist hier als durchgezogene Linie dargestellt. Der gestrichelte Rahmen soll eine Kartendarstellung andeuten. Die Kartendarstellung ist aus Übersichtsgründen nicht weiter detailliert worden. In der Kartendarstellung sind mehrere Bewegungsrouten TR1, TR2, TR3 gezeigt, die alle für die Feststellung der Anzahl und Identität der Nutzer 1 im Fahrzeug 2 mit der Fahrtroute FR mit dieser Fahrtroute FR verglichen und bewertet werden müssen. Der Vergleich VG des Analyseservers 5 umfasst das Vergleichen und die Bewertung des Vergleichs. Die Fahrtroute FR hat einen Startpunkt SP. Die Identifikation des Startpunkts SP ergibt sich beispielsweise aus dem Anlassen des Motors 23 bei einem mit der Motorsteuerung 22 oder der Fahrzeugbatterie verbundenen Fahrzeugmodul 21 oder bei einem manuellen oder automatischen Auslösen eines Startsignals und den somit erstmalig nach einer zeitlichen Pause übertragenen fahrzeugbezogenen Orts- und Zeitdaten F-OZ. Der erste Messpunkt mit seinen Orts- und Zeitdaten F-OZ entspricht dann dem Startpunkt SP. Die Identifizierung des Endpunktes EP der Fahrtroute FR kann analog zur Identifizierung des Startpunkts SP erfolgen, also beispielsweise durch Abschalten des Motors oder durch manuelles oder automatisches Auslösen eines Endsignals oder abschalten des Startsignals. Die Übereinstimmung zwischen Fahrtroute FR und einer oder mehreren der Bewegungsrouten TR1 - TR3 muss von zufälligen Begegnungen mancher Bewegungsrouten TR mit den Fahrtrouten FR unterschieden werden. Damit die Übereinstimmung hinreichend U-FN für eine Zuordnung sein kann, müssen sich die Fahrt- und Bewegungsrouten FR, TR in einem nicht zu kleinen Zeitintervall decken, andernfalls liegt nur eine zufällige Begegnung vor, ohne dass sich der Nutzer 1 zu der entsprechenden Bewegungsroute TR3 temporär im Fahrzeug befunden hat. Da die Orts- und Zeitdaten F-OZ, T-OZ nicht kontinuierlich vorliegen können, und nur als diskrete Orts-Zeit-Punkt (beispielsweise SP, ... , P1, ... , P2, ... EP) vorliegen können, kann zur Routenermittlung zwischen den Punkten interpoliert werden. Da die Orts-Zeit-Punkte für die Fahrtrouten FR und die Bewegungsrouten BR zu unterschiedlichen Zeitpunkten gemessen werden können, werden sich die interpolierten Strecken in der Regel nicht vollständig decken. Daher wird für die jeweilige zu testenden Kombinationen aus Fahrtroute FR und Bewegungsroute TR eine Wahrscheinlichtkeit für die Übereinstimmung ermittelt. Liegt die Wahrscheinlichkeit oberhalb eines festgelegten Wertes (Schwellenwert SW), so wird dies als hinreichende Übereinstimmung im System interpretiert. Im System ist ein solcher Schwellenwert SW für den Grad der Übereinstimmung definiert und für den Analyseserver 5 hinterlegt oder direkt im Analyseserver 5 abgespeichert. Die Übereinstimmung wird nur dann durch den Analyseserver 5 als hinreichende Übereinstimmung mit der Fahrtroute U-FT anerkannt, wenn der Grad der Übereinstimmung oberhalb des Schwellenwertes SW liegt. Für eine verbesserte Analyse des Grads der Übereinstimmung können die zeitliche und örtliche Übereinstimmung von Start- und Endpunkte SP, EP der individuellen Fahrtroute FR und den damit zu vergleichenden individuellen Bewegungsrouten TR1, TR2, TR3 mit eine höheren Gewichtung berücksichtigt werden als beispielsweise die Punkte P1, P2 der Fahrt- und Bewegungsrouten FR, TR1, TR2, TR3 zwischen den Start- und Endpunkten SP, EP. Im Falle der Bewegungsroute TR1 wird der höchste Grad der Übereinstimmung mit der Fahrtroute FR durch den Analyseserver 5 im Vergleich VG festgestellt. Hier decken sich Fahrtroute FR und Bewegungsroute TR1 zwischen Start- und Endpunkt SP, EP, wobei die Bewegungsroute TR1 sowohl Startpunkt SP als auch Endpunkt EP umfasst, d.h., dass die Ortsdaten der Bewegungsroute TR1 zum Zeitpunkt des Startpunkts gleich waren. Entsprechendes gilt für den Endpunkt EP. Dagegen gleichen sich zwar bei der gestrichelten Bewegungsroute TR3 der Startpunkt SP der Fahrtroute FR, jedoch weicht die Bewegungsroute TR3 für den weiteren Verlauf vollständig von der Fahrtroute FR ab, so dass ein Vergleich VG der Übereinstimmung eine Wahrscheinlichkeit unterhalb des Schwellenwertes SW liefern würde, woraufhin der Analyseserver 5 die Bewegungsroute TR3 nicht der Fahrtroute FR zuordnet und entsprechend keine Verknüpfung der Fahrzeug-ID F-ID mit der Terminal-ID T-ID3 der Bewegungsroute TR3 vornimmt. Ein im Prinzip gleiches Ergebnis würde der Vergleich VG für die Bewegunsgroute TR4, die die Fahrtroute im Punkt P2 kreuzt, durch den Analyseserver 5 ergeben. Auch hier wird durch den Analyseserver außer im Punkt P2 keine Korrelation zwischen der Fahrtroute FR und der Bewegungsroute TR4 festgestellt werden. Für die Bewegungsroute TR2 ergibt der Vergleich VG im Analyseserver 5 eine auf das zeitliche Intervall zwischen dem Startpunkt SP und dem Punkt P1 eine hinreichende Übereinstimmung U-FT mit der Fahrtroute FR. Hier würde eine Gesamtwahrscheinlichkeit für die gesamte Bewegungsstrecke TR2 unterhalb des Schwellenwertes SW liegen. Offensichtlich hat der Nutzer, der der Bewegungsroute TR2 zuzuordnen ist, bei Fahrtroute FR zwischen dem Startpunkt SP und dem Punkt P1 im Fahrzeug gesessen, da sowohl die Ortsdaten als auch die Zeitdaten T-OZ für TR2 mit den fahrzeugsbezogenen Ort- und Zeitdaten F-OZ korrelieren. Um solche zeitlich begrenzten Übereinstimmungen ermitteln zu können, werden die Wahrscheinlichkeiten abschnittsweise berechnet und ein Sprung in der Wahrscheinlichkeit, beispielsweise von einem geringen zu einem hoher Wert oder umgekehrt (wie hier) als Start- beziehungsweise Endpunkte einer Korrelation erkannt und die Terminal-ID T-ID2 dieser Bewegungsroute TR2 zumindest in dem zeitlich korrelierenden Bereich der Fahrtroute FR zugeordnet und entsprechend die Fahrzeug-ID mit der Terminal-ID durch den Analyseserver 5 verknüpft, vorzugsweise mit Angabe des zeitlich korrelierenden Intervalls (Übereinstimmung in diesem zeitlichen Intervall größer als der Schwellenwert SW). Damit zufällige Begegnungen von einer Verknüpfung ausgeschlossen werden können, kann in dem System, beispielsweise im Analyseserver, eine Mindestlänge des Zeitintervalls definiert sein, für die die berechnete Wahrscheinlichkeit oberhalb des Schwellenwertes liegt. Eine solche Mindestlänge des Zeitintervalls kann beispielsweise 5 Minuten oder mehr betragen.

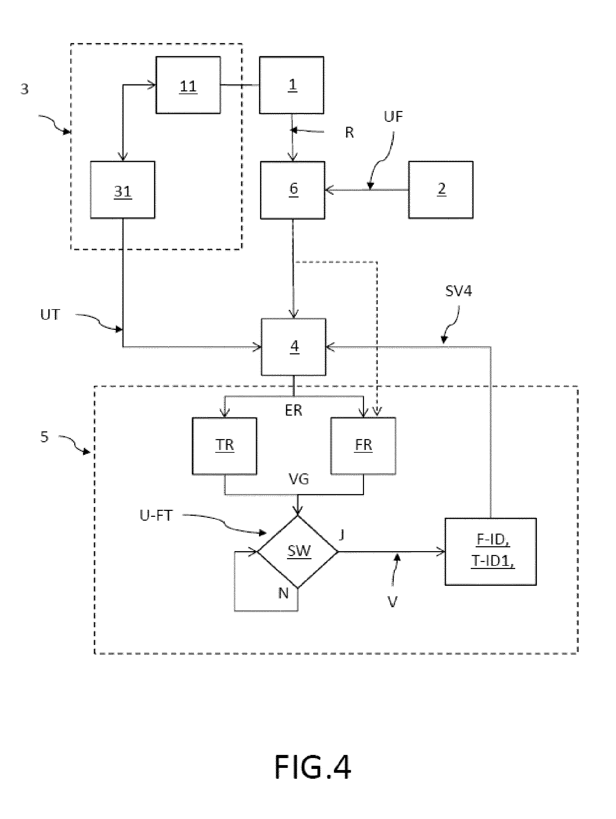

Fig.4 zeigt eine Ausführungsform des erfindungsgemäßen Verfahrens. In dem Verfahren registrieren R sich Nutzer 1 mit ihren Personendaten PD und ihren Terminal-IDs T-ID für die mobilen Terminals 11 im Fahrzeugserver 6, um im System als zugelassene potentielle Fahrer F und/oder Mitfahrer M gelten zu können. Nutzer 1 können sich als zu einer bestimmten Gruppe von Nutzern zugehörig registrieren lassen, beispielsweise als zu einer bestimmten Firma zugehörig, oder als Familienmitglied einer bestimmten Familie. Das erfindungsgemäße Verfahren kann dann nur für die jeweiligen Mitglieder dieser Gruppe von Nutzern angewendet werden. Weiterhin übermittelt UF das Fahrzeugmodul 21 die fahrzeugbezogenen Orts- und Zeitdaten F-OZ an den Fahrzeugserver 6. Das Übermitteln UT von terminalbezogene Orts- und Zeitdaten T-OZ an das Sytem, hier zur Datenbank 4, findet durch den Netzwerkserver 31 im Mobilfunknetz 3 statt, in den die Terminals 11 kommunizieren können. Dabei sind den jeweiligen mobilen Terminals 11, 11 a, 11 b, 11 c individuellen Terminal-IDs T-ID, T-ID1, T-ID2, T-ID3 zugeordnet, wonach die Nutzer 1, 1a, 1 b, 1 c dieser mobilen Terminals 11, 11a, 11 b, 11 c identifiziert werden können. Sowohl die fahrzeugbezogenen Orts- und Zeitdaten F-OZ zusammen mit den Fahrzeug-IDs F-ID für die jeweiligen Fahrzeuge 2 als auch die terminalbezogenen Orts- und Zeitdaten T-OZ zusammen mit den Terminal-IDs T-ID, T-ID1, T-ID2, T-ID3, den Personendaten PD der den Terminal-IDs T-ID, T-ID1, T-ID2, T-ID3 zugeordneten Nutzern 1, 1 a, 1 b, 1 c werden für jedes der mobilen Terminals 11, 11 a, 11 b, 11 c in der Datenbank 4 gespeichert S. Aus den so über zwei getrennte Quellen erhaltenen Ort- und Zeitdaten F-OZ und T-OZ werden individuelle Fahrtrouten FR und individuelle personenbezogene Bewegungsrouten TR, TR1, TR2, TR3, TR4 ermittelt ER. Die Ermittlung ER kann dabei beispielsweise im Analyseserver 5, im Fahrzeugserver 6 (gestrichelte Pfeil) oder im Netzwerkserver 31 erfolgen. Hier ist die Ermittlung ER im Analyseserver 5 dargestellt. Der Analyseserver 5 vergleicht VG dann die ermittelten individuellen Fahrtrouten FR mit den ermittelten Bewegungsrouten TR, TR1, TR2, TR3, TR4. Ergibt dieser Vergleich VG eine Wahscheinlichkeit der Korrelation der Fahrtroute FR mit der geprüften Bewegungsroute TR oberhalb des Schwellenwertes SW, so verknüpft V der Anayseserver 5 die Fahrzeug-IDs F-ID mit der Terminal-ID T-ID. Sollte keine Übereinstimmung oberhalb des Schwellenwertes festgestellt worden sein, wird das Verfahren mit der nächsten Bewegungsroute TR fortgeführt, die dann mit derselben Fahrtroute FR verglichen wird. Sind alle Bewegungsrouten TR mit dieser Fahrtroute verglichen worden VG, so wird das Verfahren mit der nächsten Fahrtroute fortgesetzt, mit der dann alle Bewegungsrouten verglichen VG werden. Das Verfahren wird fortgesetzt, bis alle Kombinationen aus Fahrtrouten FR und Bewegungsrouten TR verglichen VG worden sind. Die erfolgten Verknüpfungen V der Fahrzeug-IDs F-ID mit den Terminal-IDs T-ID werden zusammen mit den Personendaten PD der den Terminal-IDs T-ID zugeordneten Nutzern 1 Datenbank 4 abgespeichert SV4.

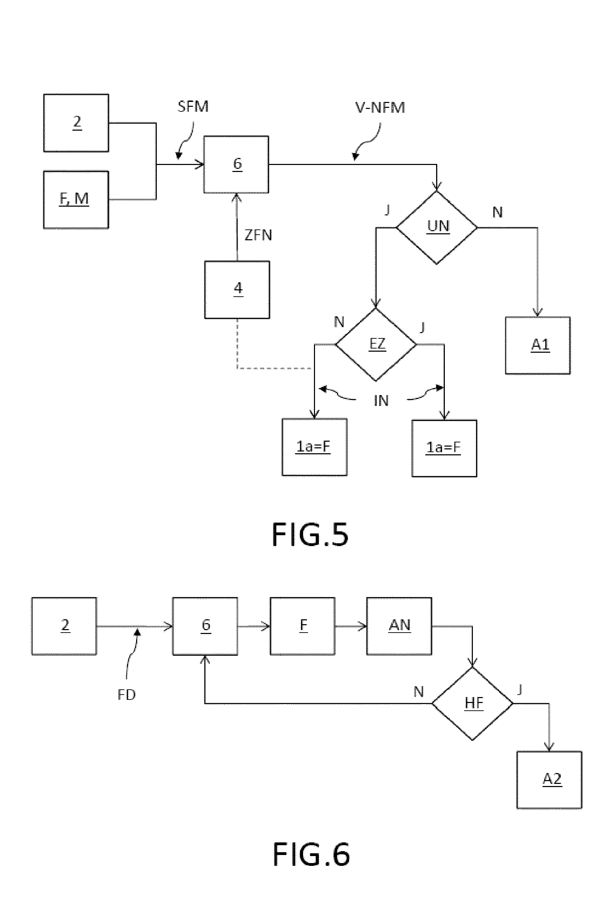

Fig.5 zeigt eine weitere Ausführungsform der Identifizierung des Fahrers F eines Fahrzeugs 2 im Rahmen des erfindungsgemäßen Verfahrens. Hierzu werden die Daten der zugelassenen Fahrer F und/oder Mitfahrer M für die jeweiligen Fahrzeuge 2 in dem Fahrzeugserver 6 abgespeichert SFM und diese Daten für eine Nutzer/Fahrer-Analyse im System bereitgestellt. Der Fahrzeugserver 6 ist dafür zumindest mit der Datenbank 4 verbunden. Der Fahrzeugserver 6 prüft über einen Vergleich V-NFM der mittels des Analyseservers 5 zugeordneten Nutzer 1 für diese Fahrzeuge 2 mit den für diese Fahrzeuge 2 zugelassenen Fahrern F und/oder Mitfahrern M, ob das Fahrzeug 2 von einem zugelassenen Nutzer gefahren worden ist. Im Falle einer Übereinstimmung (UN = J) lediglich eines der zugeordneten Nutzer 1a mit einem der zugelassenen Fahrer F und/oder Mitfahrer M für dieses Fahrzeug 2 (eindeutige Zuordnung EZ = J) wird dieser Nutzer 1a als der Fahrer F des Fahrzeugs 2 indiziert IN. Die Indizierung IN kann in der Datenbank 4 und/oder im Fahrzeugserver 6 abgespeichert werden. Im Falle mehrerer Übereinstimmungen (UN = J) zwischen zugeordneten Nutzern 1a, 1 b, 1 c und zugelassenen Fahrern F und/oder Mitfahrern M (eindeutige Zuordnung EZ = N) für dieses Fahrzeug 2 wird der Nutzer 1a als Fahrer F indiziert IN, dessen individuelle Bewegungsroute TR1 die größte Übereinstimmung U-FT mit der individuellen Fahrtroute FR für das Fahrzeug 2 besitzt. Im Falle keiner Übereinstimmung (UN=N) zwischen zugeordneten Nutzern 1a, 1 b, 1 c und zugelassenen Fahrern F und/oder Mitfahrern M oder keiner hinreichenden Übereinstimmung U-FT mit individuellen Bewegungsrouten TR1, TR2, TR3, TR4 für dieses Fahrzeug 2 wird ein erstes Alarmsignal A1 an das System ausgesendet. Dieses erste Alarmsignal A 1 kann einerseits dazu benutzt werden, den zugelassenen Fahrer F auf seine Verpflichtung zum Führen des Fahrzeugs 2 hinzuweisen, oder das Alarmsignal A1 kann in Verbindung mit dem Ergebnis der Vergleichs V-NFM und der nicht erfolgten Zuordnung von Nutzern 1 zu der Fahrtroute FR durch den Analyseserver 5 als Hinweis auf einen Diebstahl des Fahrzeugs 2 gewertet werden. Der Systembetreiber kann dann als Reaktion auf das erste Alarmsignal A1 die geeigneten Schritte unternehmen. Das erste Alarmsignal A1 kann akustisch, optisch oder durch eine entsprechende automatische elektronische Benachrichtigung entsprechender Stellen im System ausgesendet werden. Das Ergebnis des Vergleichs V-NFM wird im System, beispielsweise im Fahrzeugserver 6, gespeichert SV6.

Fig.6 zeigt eine weitere Ausführungsform der Auswertung der Fahrdaten FD im Rahmen des erfindungemäßen Verfahrens. Dabei ist das Fahrzeug 2 mit einem oder mehreren Fahrsensoren 24, vorzugsweise Beschleunigungssensoren 24, ausgestattet, die Fahrdaten FD an das Fahrzeugmodul 21 senden. Das Fahrzeugmodul 21 übermittelt UF diese Fahrdaten FD zusammen mit den zugehörigen Orts- und Zeitdaten F-OZ parallel oder in einem gemeinsamen Datenpaket an das System, hier den Fahrzeugserver 6. Nach der Übermittlung der Fahrdaten FD analysiert AN der Fahrzeugserver 6 (alternativ auch der Analyseserver 5) die Fahrdaten auf Überschreitung von vorher festgelegten Höchstwerten HF, beispielsweise durch Abgleich mit am Fahrzeugserver 6 hinterlegten Kartenmaterial und den dort hinterlegten Geschwindigkeitsbegrenzungen für bestimmte Straßen - oder Wegabschnitte und ordnet die Fahrdaten FD und gegebenenfalls die Höchstwert-Überschreitungen dem für dieses Fahrzeug 2 indizierten IN Fahrers F zu. Hierbei kann die Zuordnung vor der Analsyse oder umgekehrt erfolgen. Im Falle eines Beschleunigungssensors als Fahrsensors 24 und einem festgelegten Höchstwert HF einer maximalen negative Beschleunigung kann der Fahrzeugserver 6 bei Überschreiten dieser maximalen negativen Beschleunigung HF ein zweites Alarmsignal A2 an das System aussenden, wobei das zweite Alarmsignal A2 die diesem Fahrzeug 2 zugeordneten Nutzer 1, 1a, 1 b, 1 c und gegebenenfalls den indizierten IN Fahrer F umfasst. Die Höchstwerte HF negativer Beschleunigungen können beispielsweise denen für die Auslösung der Airbags in Fahrzeugen 2 entsprechen. Diese negativen Beschleunigungen werden als Unfallsituation interpretiert. Somit kann bei einer Feststellung eines entsprechenden Beschleunigungswertes ein Unfall des Fahrzeugs 2 detektiert werden. Aufgrund der vorliegenden Erfindung ist der Systembetreiber infolge des erhaltenen zweiten Alarmsignals A2 in der Lage, geeignete Rettungsdienste oder Polizeistellen für weitere Sicherungs- und Rettungsmaßnahmen zu informieren. Zusätzlich kann aufgrund des erfindungsgemäßen Systems den Rettungsdiensten zusätzliche Informationen, wie beispielsweise die Anzahl an Personen (entspricht der Anzahl der zugeordneten Nutzer 1 zu dieser Fahrtroute FR) im Fahrzeug 2 und die Identität des Fahrers F, für dieses Fahrzeug 2 genannt werden. Das zweite Alarmsignal kann akustisch, optisch oder durch eine entsprechende automatische elektronische Benachrichtigung entsprechender Stellen im System ausgesendet werden. Das Ergebnis des Vergleichs V-NFM wird im System, beispielsweise im Fahrzeugserver 6, gespeichert SV6.

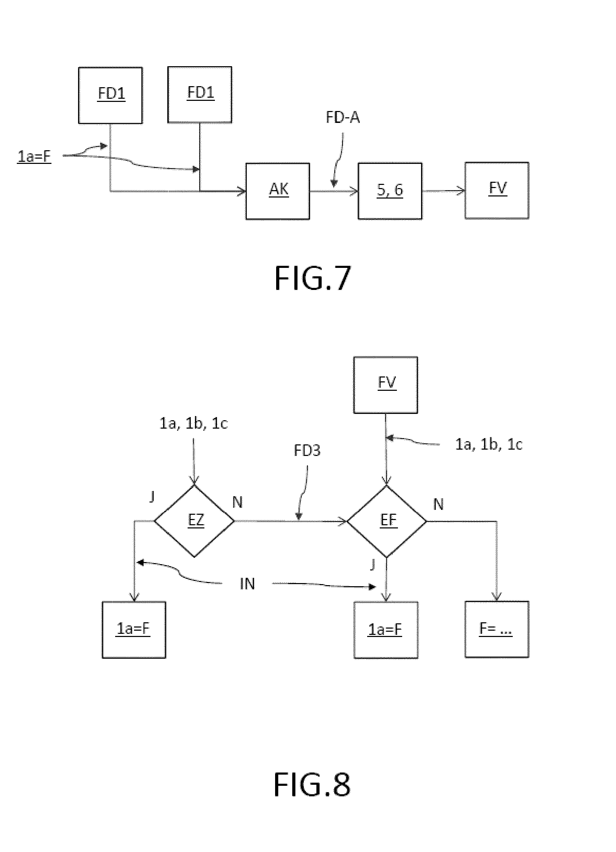

Fig.7 zeigt eine weitere Ausführungsform der Auswertung der Fahrdaten FD im Rahmen des erfindungsgemäßen Verfahrens. Hierbei werden die zu dem Nutzer 1a als indentifizierten Fahren F zugeordneten Fahrdaten FD1, FD2, die beispielsweise bei einer ersten und zweiten Fahrt des Nutzers 1a mit einem oder mehreren Fahrzeugen 2 erfasst wurden, im Fahrzeugserver 6 oder im Analyseserver 5 für diesen Nutzer 1a akkumuliert AK und aus den akkumulierten Fahrdaten FD-A ein spezifisches Fahrverhalten FV für den Nutzer 1 a als den identifizierten Fahrer F bestimmt. Das hier gezeigte Beispiel mit zwei Sätzen an Fahrdaten FD1, FD2 ist nicht auf nur zwei Sätze an Fahrdaten FD1, FD2 beschränkt. Das Fahrverhalten FV kann umso präziser bestimmt werden, je mehr Sätze an Fahrdaten FD1, FD2, ... für einen bestimmten Nutzer 1a akkumuliert AK werden können. Daher ist das System dazu ausgestaltet, alle bereits vorhandenen und später neu hinzukommenden einem bestimmten Nutzer 1a zuzuordnenden Fahrdaten FD1, FD2, ... zu einem Fahrverhalten FV zu akkumulieren AK, wobei die zu einem bereits bestimmten Fahrverhalten FV später hinzukommende Fahrdaten verwendet werden, um das Fahrverhalten FV zu präzisieren oder zu aktualisieren. Es handelt sich also, um ein auf der Fahrhistorie der Fahrdaten eines jeden Fahrers basierenden, selbstlernenden System. Dieses nutzerspezifische Fahrverhalten FV kann beispielsweise zur Identifikation von Fahrrisiken für bestimmte Nutzer oder zu anderen statistischen Auswertungen wie beispielsweise einem sparsamen Fahren verwendet werden.

Fig.8 zeigt eine weitere Ausführungsform, in der das aus den akkumulierten Fahrdaten FD-A bestimmte Fahrverhalten FV zur Identifizierung des Fahrers F im Rahmen des erfindungsgemäßen Verfahrens verwendet wird. Sofern nur ein einziger Nutzer 1a als Fahrer F in Frage kommt (EZ=J), erfolgt die Identifizierung des Fahrers F wie bereits in Figur 5 beschrieben. Ergeben sich stattdessen, wie in dieser Ausführungsform gezeigt, beispielsweise für die Nutzer 1 a, 1 b, 1 c hinreichend große Übereinstimmungen der Fahrroute mit den jeweiligen Bewegungsrouten der Nutzer 1 a, 1 b, 1 c, so kommen alle diese Nutzer 1 a, 1 b, 1 c als mögliche Fahrer oder Mitfahrer in dem Fahrzeug 2 mit den Fahrdaten FD3 in Frage. Um eine besser fundierte Identifikation IN des Fahrers F aus der Gruppe der Nutzer 1a, 1 b, 1 c als möglicher Fahrer/Mitfahrer treffen zu können, werden die entsprechenden Fahrdaten FD3 mit den jeweiligen vorhandenen Fahrverhalten FV für die Nutzer 1 a, 1 b, 1 c verglichen EF. Beispielsweise wird der Nutzer 1a dabei als der Fahrer identifiziert IN, wenn der Grad der Übereinstimmung seines Fahrverhaltens FV mit den Fahrdaten FD3 am größten ist. Nach der erfolgten Identifikation IN des Nutzers 1a als der Fahrer F bei der Fahrt mit den Fahrdaten FD3 werden diese Fahrdaten FD3 zu den bereits akkumulierten Fahrdaten FD-A hinzuakkumuliert, um ein aktualisiertes Fahrverhalten FV für diesen Nutzer 1 a zu erstellen. In einer bevorzugten Ausführungsform wird der Grad der Übereinstimmung nur dann ausgewertet, sofern der Grad der Übereinstimmung oberhalb eines Fahrdaten-Schwellenwerts liegt. In diesem Fall (Pfeil EF=N) kann eine Identifikation IN des Fahrers F nach anderen Kriterien, beispielsweise wie in Figur 5 beschrieben, erfolgen. In einer weiteren Ausführungsform kann das bisherige bestimmte Fahrverhalten FV für einen Nutzer 1a, der als Fahrer F für eine weitere Fahrt mit einem Fahrzeug 2 identifiziert wurde, verwendet werden, um über einen Vergleich des Fahrverhaltens mit den Fahrdaten FD3 dieser letzten Fahrt die getroffene Identifizierung IN des Nutzers 1a als der Fahrer F zu verifizieren. Das System kann eine erfolgreiche Verifikation beispielsweise feststellen, wenn der Grad der Übereinstimmung zwischen vorliegendem Fahrverhalten FV und letzten Fahrdaten FD3 über einem vorher definierten Fahrdaten-Schwellenwert liegt. In den voranstehend beschriebenen Fällen werden die Fahrdaten FD3 zu einer Aktualisierung des Fahrverhaltens FV für den Nutzer 1 a verwendet.

### Liste der Bezugszeichen

- 1: Nutzer
- 1a: erster Nutzer
- 1b: zweiter Nutzer
- 1c: dritter Nutzer
- 11: mobiles Terminal des Nutzers
- 11a: erstes mobiles Terminal des ersten Nutzers
- 11b: zweites mobiles Terminal des zweiten Nutzers
- 11c: drittes mobiles Terminal des dritten Nutzers
- 2: Fahrzeug
- 21: Fahrzeugmodul
- 22: Motorsteuerung des Fahrzeugmotors
- 23: Motor des Fahrzeugs
- 24: Fahrsensor(en), Beschleunigungssensor
- 3: Mobilfunknetz
- 31: Netzwerkserver
- 4: Datenspeicher, beispielsweise eine Datenbank
- 5: Analyseserver
- 6: Fahrzeugserver

- A1: erstes Alarmsignal
- A2: zweites Alarmsignal
- AK: Akkumulieren von Fahrdaten
- AN: Analysieren der Fahrdaten
- DP: Datenpaket
- EF: Vergleich Fahrdaten mit vorhandenen Fahrverhalten für verschiedene Nutzer
- EP: Endpunkt einer Fahrtroute
- ER: Ermitteln der Fahrtroute und der Bewegungsroute aus den Ort- und Zeitdaten
- EZ: eindeutige Zuordnung zwischen Fahrer und Nutzer möglich
- F: zugelassener Fahrer
- FD: Fahrdaten der Fahrsensoren
- FD1: erste Fahrdaten
- FD2: zweite Fahrdaten
- FD3: dritte Fahrdaten
- FD-A: akumulierte Fahrdaten
- F-ID: Fahrzeug-ID
- F-OZ: fahrzeugbezogene Orts- und Zeitdaten
- FR: individuelle Fahrtroute des Fahrzeugs
- FV: Fahrverhalten
- HF: festgelegte Höchstwerte für Fahrdaten
- K: Kommunikation der Terminals im Mobilfunknetz, Übermittlung von terminalbezogenen Ort- und Zeitdaten an den Netzwerkserver
- IN: Indizieren eines der Nutzer als Fahrer
- M: Mitfahrer
- P1, P2: Punkte auf den Fahr- und/oder Bewegungsrouten FR, TR
- PD: Personendaten
- R: Registrieren von zugelassenen Fahrern und/oder Mitfahrer im System mit Personendaten und Terminal-IDs für die mobilen Terminals.
- S: Speichern der fahrzeug- und terminalbezogenen Ort- und Zeitdaten
- SFM: Speichern der für ein Fahrzeug zugelassenen Fahrer und/oder Mitfahrer
- SP: Startpunkt einer Fahrtroute
- SV4: Speichern der verknüpften Fahrzeug- und Terminal-IDs zusammen mit den Personendaten
- SV6: Speichern des Ergebnisses des Vergleichs V-NFM
- SW: Schwellenwert für den Grad der Übereinstimmung von FR und TR
- T-ID: Terminal-ID
- T-ID1: individuelle Terminal-ID des ersten mobilen Terminals
- T-ID2: individuelle Terminal-ID des zweiten mobilen Terminals
- T-ID3: individuelle Terminal-ID des dritten mobilen Terminals
- T-OZ: terminalbezogene Orts- und Zeitdaten
- TR: individuelle Bewegungsroute des Terminals
- TR1: erste individuelle Bewegungsroute des ersten Terminals
- TR2: zweite individuelle Bewegungsroute des zweiten Terminals
- TR3: dritte individuelle Bewegungsroute des dritten Terminals
- TR4: vierte individuelle Bewegungsroute des vierten Terminals
- UF: Übermittlung von fahrzeugbezogenen Orts- und Zeitdaten an das System
- U-FT: hinreichende Übereinstimmung zwischen Fahrtroute und Bewegungsroute
- UN: Übereinstimmung Nutzer mit Fahrer oder Mitfahrer
- UT: Übermittlung von terminalbezogenen Orts- und Zeitdaten an das System
- VG: Vergleichen der Fahrtrouten mit den Bewegungsrouten
- V: Verknüpfen von Fahrzeug-ID mit Terminal-ID(s)
- V-NFM: Vergleich der zugeordneten Nutzer mit den zugelassenen Fahrern und/oder Mitfahrern
- ZFN: Zuordnung zwischen Fahrzeugen und Nutzern

## Patentansprüche

1. Ein System zur Feststellung von Anzahl und Identität von Nutzern (1) in einem Fahrzeug (2), umfassend
- mindestens ein Fahrzeug (2) mit einer zugeordneten individuellen Fahrzeug-ID (F-ID) und mit einem Fahrzeugmodul (21) zur drahtlosen Übermittlung (UF) von fahrzeugbezogenen Orts- und Zeitdaten (F-OZ) an das System,
- mindestens ein Mobilfunknetz (3) mit einem Netzwerkserver (31) und mehreren mobilen Terminals (11, 11 a, 11 b, 11 c), geeignet zur Kommunikation zumindest in dem Mobilfunknetz (3), wobei den jeweiligen mobilen Terminals (11, 11 a, 11 b, 11 c) individuelle Terminal-IDs (T-ID, T-ID1, T-ID2, T-ID3) zugeordnet sind und die Nutzer (1, 1a, 1 b, 1 c) der mobilen Terminals (11, 11 a, 11 b, 11 c) anhand der Terminal-ID (T-ID, T-ID1, T-ID2, T-ID3) identifiziert werden können und der Netzwerkserver (31) dazu ausgestaltet ist, terminalbezogene Orts- und Zeitdaten (T-OZ) an das System zu übermitteln (UT),
- einen oder mehrere Datenspeicher (4) zur Speicherung (S) der fahrzeugbezogenen Orts- und Zeitdaten (F-OZ) zusammen mit der Fahrzeug-ID (F-ID) zur Ermittlung (ER) der individuellen Fahrtroute (FR) des mindestens einem Fahrzeuges (2) und zur Speicherung (S) der terminalbezogenen Orts- und Zeitdaten (T-OZ) zusammen mit den Terminal-IDs (T-ID, T-ID1, T-ID2, T-ID3) sowie von Personendaten (PD) der den Terminal-IDs (T-ID, T-ID1, T-ID2, T-ID3) zugeordneten Nutzern (1, 1a, 1 b, 1 c) zur Ermittlung (ER) individueller personenbezogener Bewegungsrouten (TR, TR1, TR2, TR3) für jedes der mobilen Terminals (1, 1 a, 1 b, 1 c),
- einen Analyseserver (5), der dazu ausgestaltet ist, auf den einen oder die mehreren Datenspeicher (4) zuzugreifen und die ermittelte individuelle Fahrtroute (FR) mit den ermittelten individuellen Bewegungsrouten (TR, TR1, TR2, TR3, TR4) zu vergleichen (VG), und bei einer zumindest in einem zeitlichen Intervall hinreichenden Übereinstimmung (U-FT) der zumindest einer der individuellen Fahrtroute (FR) mit ein oder mehreren der individuellen Bewegungsrouten (TR, TR1, TR2, TR3, TR4) die betreffende Fahrzeug-ID (F-ID) mit den zu diesen individuellen Bewegungsrouten (TR, TR1, TR2, TR3, TR4) gehörigen Terminal-IDs (T-ID, T-ID1, T-ID2, T-ID3) zu verknüpfen (V) und in dem oder den Datenspeichern (4) zusammen mit den Personendaten (PD) der den Terminal-IDs (T-ID, T-ID1, T-ID2, T-ID3) zugeordneten Nutzern (1, 1a, 1 b, 1 c) abzuspeichern (SV4),
wobei die Übereinstimmung nur hinreichend (U-FT) ist, wenn der Grad der Übereinstimmung oberhalb eines definierten Schwellenwertes (SW) liegt und für den Grad der Übereinstimmung die zeitliche und örtliche Übereinstimmung von Start- und Endpunkte (SP, EP) der individuellen Fahrtroute (FR) und den damit zu vergleichenden individuellen Bewegungsrouten (TR, TR1, TR2, TR3, TR4) mit einer höheren Gewichtung berücksichtigt wird als Punkte (P1, P2, P3) der Fahrt- und Bewegungsrouten (FR, TR) zwischen den Start- und Endpunkten (SP, EP).

2. Das System nach Anspruch 1,
**dadurch gekennzeichnet,**
**dass** das System einen Fahrzeugserver (6) umfasst und das Fahrzeugmodul (21) die Orts- und Zeitdaten (F-OZ) an den Fahrzeugserver (6) übermittelt und die individuelle Fahrtroute (FR) des mindestens einen Fahrzeuges (2) durch den Fahrzeugserver (6) bestimmt wird.

3. Das System nach Anspruch 2,
**dadurch gekennzeichnet,**
**dass** der Fahrzeugserver (6) dazu ausgestaltet ist, die dem mindestens einen Fahrzeug (2) mittels des Analyseservers (5) zugeordneten Nutzer (1, 1 a, 1 b, 1c) mit den für dieses Fahrzeug (2) zugelassenen Fahrern (F) und/oder Mitfahrern (M) zu vergleichen (V-NFM), das Ergebnis des Vergleichs (V-NFM) zu speichern (SV6) und im Falle einer Übereinstimmung (UN) lediglich eines der zugeordneten Nutzer (1 a) mit einem der zugelassenen Fahrer (F) und/oder Mitfahrer (M) für das Fahrzeug (2) diesen einen Nutzer (1a) als den Fahrer (F) dieses Fahrzeugs (2) zu indizieren (IN).

4. Das System nach Anspruch 3,
**dadurch gekennzeichnet,**
**dass** der Fahrzeugserver (6) dazu vorgesehen ist, im Falle keiner Übereinstimmung (UN) zwischen zugeordneten Nutzern (1, 1a, 1 b, 1 c) und zugelassenen Fahrern (F) und/oder Mitfahrern (M) oder keiner hinreichenden Übereinstimmung (U-FT) mit individuellen Bewegungsrouten (TR, TR1, TR2, TR3, TR4) für dieses Fahrzeug (2) ein erstes Alarmsignal (A1) an das System auszusenden.

5. Das System nach einem der Ansprüche 3 oder 4,
**dadurch gekennzeichnet,**
**dass** der Fahrzeugserver (6) dazu vorgesehen ist, im Falle mehrerer Übereinstimmungen (UN) zwischen zugeordneten Nutzern (1, 1a, 1b, 1c) und zugelassenen Fahrern (F) und/oder Mitfahrern (M) für dieses Fahrzeug (2) den Nutzer (1a) als Fahrer (F) zu indizieren, dessen individuelle Bewegungsroute (TR1) die größte Übereinstimmung (U-FT) mit der individuellen Fahrtroute (FR) für das Fahrzeug (2) besitzt.

6. Das System nach einem der voranstehenden Ansprüche,
**dadurch gekennzeichnet,**
**dass** das Mobilfunknetz (3) dazu ausgestaltet ist, die Übermittlung (K) von terminalbezogene Orts- und Zeitdaten (T-OZ) von den mobilen Terminals (11, 11 a, 11 b, 11 c) an den Netzwerkserver (31) zu triggern oder dass auf dem mobilen Terminal (11) eine Applikation installiert ist, die die Übermittlung (K) von terminalbezogene Orts- und Zeitdaten (T-OZ) an den Netzwerkserver (31) triggert.

7. Das System nach einem der voranstehenden Ansprüche,
**dadurch gekennzeichnet,**
**dass** Fahrdaten (FD) aus den fahrzeugbezogenen Orts- und Zeitdaten (F-OZ) gewonnen werden und/oder dass das Fahrzeug (2) mit einem oder mehreren Fahrsensoren (24), vorzugsweise Beschleunigungssensoren (24), ausgestattet ist, die die Fahrdaten (FD) an das Fahrzeugmodul (21) senden und das Fahrzeugmodul (21) diese Fahrdaten (FD) zusammen mit den zugehörigen Orts- und Zeitdaten (F-OZ) an das System übermittelt.

8. Das System nach Anspruch 7,
**dadurch gekennzeichnet,**
**dass** der Analyseserver (5) und/oder der Fahrzeugserver (6) dazu ausgestaltet ist/sind, die Fahrdaten (FD1, FD2) dem als Fahrer (F) identifizierten Nutzer (1a) zuzuordnen, die Fahrdaten (FD1, FD2) für alle Fahrten dieses Nutzers (1a) zu akkumulieren (AK), aus den akkumulierten Fahrdaten (FD-A) ein spezifisches Fahrverhalten (FV) für den Nutzer (1a) zu bestimmen und das spezifische Fahrverhalten (FV) zur Identifizierung eines bestimmten Nutzers (1 a, 1 b, 1 c) als der Fahrer (F) aus einer Gruppe vom mehreren Nutzern (1 a, 1 b, 1 c), die mögliche Fahrer (F) sein könnten, und/oder zur Verifizierung der Identifikation eines der Nutzer (1a, 1 b, 1 c) als der Fahrer (F) zu verwenden.

9. Ein Verfahren zum Betreiben des Systems nach Anspruch 1, umfassend mindesten ein Fahrzeug (2) mit einer zugeordneten individuellen Fahrzeug-ID (F-ID) und mit einem Fahrzeugmodul (21), mindestens ein Mobilfunknetz (3) mit einem Netzwerkserver (31) und mehreren mobilen Terminals (11, 11 a, 11 b, 11 c), geeignet zur Kommunikation zumindest in dem Mobilfunknetz (3), ein oder mehrere Datenspeicher (4) und einen Analyseserver (5), umfassend die Schritte
- Registrieren (R) von zugelassenen Fahrern (F) und/oder Mitfahrer (M) im System mit Personendaten (PD) und Terminal-IDs (T-ID) für die mobilen Terimals (11) der Fahrer (F) und/oder Mitfahrer (M),
- Übermitteln (UF) von fahrzeugbezogenen Orts- und Zeitdaten (F-OZ) an das System durch das Fahrzeugmodul (21),
- Übermitteln (UT) von terminalbezogene Orts- und Zeitdaten (T-OZ) durch den Netzwerkserver (31) an das System, wobei den jeweiligen mobilen Terminals (11, 11 a, 11 b, 11 c) individuelle Terminal-IDs (T-ID, T-ID1, T-ID2, T-ID3) zugeordnet sind und die Nutzer (1, 1a, 1b, 1c) der mobilen Terminals (11, 11 a, 11 b, 11 c) anhand der individuellen Terminal-IDs (T-ID, T-ID1, T-ID2, T-ID3) identifiziert werden können,
- Speichern (S) der fahrzeugbezogenen Orts- und Zeitdaten (F-OZ) zusammen mit der Fahrzeug-ID (F-ID) für das zumindest eine Fahrzeug (2) und Speichern (S) der terminalbezogenen Orts- und Zeitdaten (T-OZ) zusammen mit den Terminal-IDs (T-ID, T-ID1, T-ID2, T-ID3) sowie der Personendaten (PD) der den Terminal-IDs (T-ID, T-ID1, T-ID2, T-ID3) zugeordneten Nutzern (1, 1 a, 1 b, 1 c) für jedes der mobilen Terminals (11, 11 a, 11 b, 11 c) in ein oder mehreren Datenspeichern (4),
- Ermittlung (ER) der individuellen Fahrtroute (FR) und individueller personenbezogener Bewegungsrouten (TR, TR1, TR2, TR3, TR4) aus den gespeicherten fahrzeugbezogenen Orts- und Zeitdaten (F-OZ) und terminalbezogenen Orts- und Zeitdaten (T-OZ),
- Vergleichen (VG) der ermittelten individuellen Fahrtroute (FR) mit den ermittelten Bewegungsrouten (TR, TR1, TR2, TR3, TR4) in einem Analyseserver (5),
- Verknüpfen (V) der Fahrzeug-ID (F-ID) des zumindest einen Fahrzeug (2) mit ein oder mehreren Terminal-IDs (T-ID, T-ID1, T-ID2, T-ID3) bei einer zumindest in einem zeitlichen Intervall hinreichenden Übereinstimmung (U-FT) der zu der Fahrzeug-ID (F-ID) zugehörigen individuellen Fahrtroute (FR) mit den zu den ein oder mehreren Terminal-IDs (T-ID, T-ID1, T-ID2, T-ID3) zugehörigen individuellen Bewegungsrouten (TR, TR1, TR2, TR3) wobei die Übereinstimmung nur hinreichend (U-FT) ist, wenn der Grad der Übereinstimmung oberhalb eines definierten Schwellenwertes (SW) liegt und für den Grad der Übereinstimmung die zeitliche und örtliche Übereinstimmung von Start- und Endpunkte (SP, EP) der individuellen Fahrtroute (FR) und den damit zu vergleichenden individuellen Bewegungsrouten (TR, TR1, TR2, TR3, TR4) mit einer höheren Gewichtung berücksichtigt wird als Punkte (P1, P2, P3) der Fahrt- und Bewegungsrouten (FR, TR) zwischen den Start- und Endpunkten (SP, EP), und
- Abspeichern (SV4) der Verknüpfung (V) der Fahrzeug-ID (F-ID) mit den Terminal-IDs (T-ID, T-ID1, T-ID2, T-ID3) zusammen mit den Personendaten (PD) der den Terminal-IDs (T-ID, T-ID1, T-ID2, T-ID3) zugeordneten Nutzern (1, 1 a, 1 b, 1 c) in dem oder den Datenspeichern (4).

10. Das Verfahren nach Anspruch 9, umfassend die weiteren Schritte
- Abspeichern (SFM) zugelassener Fahrer (F) und/oder Mitfahrer (M) für das zumindest eine Fahrzeug (2) in einem Fahrzeugserver (6), der zumindest mit dem oder den Datenspeichern (4) verbunden ist,
- Vergleichen (V-NFM) der mittels des Analyseservers (5) zugeordneten Nutzer (1, 1a, 1 b, 1 c) dieses Fahrzeuges (2) mit den für diese Fahrzeug (2) zugelassenen Fahrern (F) und/oder Mitfahrern (M), und
- Speichern (SV6) des Ergebnisses des Vergleichs (V-NFM), und
- im Falle einer Übereinstimmung (UN) lediglich eines der zugeordneten Nutzer (1a) mit einem der zugelassenen Fahrer (F) und/oder Mitfahrer (M) für dieses Fahrzeug (2) Indizieren (IN) dieses einen Nutzers (1a) als der Fahrer (F) dieses Fahrzeugs (2) durch den Fahrzeugserver (6),
- im Falle keiner Übereinstimmung (UN) zwischen zugeordneten Nutzern (1, 1a, 1 b, 1 c) und zugelassenen Fahrern (F) und/oder Mitfahrern (M) oder keiner hinreichenden Übereinstimmung (U-FT) mit individuellen Bewegungsrouten (TR, TR1, TR2, TR3, TR4) für dieses Fahrzeug (2) Aussenden eines ersten Alarmsignals (A1) an das System oder
- im Falle mehrerer Übereinstimmungen (UN) zwischen zugeordneten Nutzern (1, 1a, 1 b, 1 c) und zugelassenen Fahrern (F) und/oder Mitfahrern (M) für dieses Fahrzeug (2) Indizieren (IN) des Nutzer (1a) als der Fahrer (F) dieses Fahrzeugs (2), dessen individuelle Bewegungsroute (TR1) die größte Übereinstimmung (U-FT) mit der individuellen Fahrtrouten (FR) für das Fahrzeug (2) besitzt.

11. Das Verfahren nach Anspruch 10, umfassend die weiteren Schritte
- Analysieren (AN) von erfassten Fahrdaten (FD) im Fahrzeugsserver (6) oder Analyseserver (5), und
- Zuordnen der Fahrdaten (FD) zu dem für dieses Fahrzeug (2) indizierten (IN) Fahrers (F).

12. Das Verfahren nach Anspruch 11, umfassend die weiteren Schritte dass die zugeordneten Fahrdaten (FD1, FD2) für den identifizierten Nutzer (1 a) als der Fahrer (F) für alle Fahrten dieses Nutzers (1 a) akkumuliert (AK) werden und aus den akkumulierten Fahrdaten (FD-A) ein spezifisches Fahrverhalten (FV) für den identifizierten Nutzer (1 a) bestimmt wird, wobei das spezifische Fahrverhalten zur Identifizierung eines der Nutzer (1a, 1 b, 1 c) als Fahrer (F) und/oder zur Verifizierung der Identifikation eines der Nutzer (1 a) als der Fahrer (F) verwendet wird.

## Claims

1. A system for determining the number and the identity of users (1) in a vehicle (2), comprising
- at least one vehicle (2) with an associated individual vehicle ID (F-ID) and with a vehicle module (21) for the wireless transmission (UF) of vehicle-specific position and time data (F-OZ) to the system,
- at least one mobile telecommunications network (3) with a network server (31) and several mobile terminals (11, 11 a, 11 b, 11c), suitable for communication at least in the mobile telecommunications network (3), whereby individual terminal IDs (T-ID, T-ID1, T-ID2, T-ID3) are associated with each of the mobile terminals (11, 11 a, 11 b, 11c), and the users (1, 1 a, 1 b, 1 c) of the mobile terminals (11, 11 a, 11b, 11c) can be identified on the basis of the terminal ID (T-ID, T-ID1, T-ID2, T-ID3), and the network server (31) is configured to transmit (UT) terminal-specific position and time data (T-OZ) to the system,
- one or more data storage units (4) for storing (S) the vehicle-specific position and time data (F-OZ), together with the vehicle ID (F-ID), in order to ascertain (ER) the individual travel route (FR) of the at least one vehicle (2), and in order to store (S) the terminal-specific position and time data (T-OZ), together with the terminal IDs (T-ID, T-ID1, T-ID2, T-ID3) and also personal data (PD) of the users (1, 1a, 1b, 1c) associated with the terminal IDs (T-ID, T-ID1, T-ID2, T-ID3) in order to ascertain (ER) individual person-specific movement routes (TR, TR1, TR2, TR3) for each of the mobile terminals (11, 11 a, 11 b, 11c),
- an analysis server (5) that is configured to access the one or more data storage units (4) and to compare (VG) the ascertained individual travel route (FR) to the ascertained individual movement routes (TR, TR1, TR2, TR3, TR4), and, in case of sufficient correspondence (U-FT) of at least one of the individual travel routes (FR) with one or more of the individual movement routes (TR, TR1, TR2, TR3, TR4), at least over a given time interval, to link (V) the appertaining vehicle ID (F-ID) with the terminal IDs (T-ID, T-ID1, T-ID2, T-ID3) belonging to these individual movement routes (TR, TR1, TR2, TR3, TR4), and to store (SV4) this in the data storage unit or units (4), together with the personal data (PD) of the users (1, 1a, 1b, 1c) associated with the terminal IDs (T-ID, T-ID1, T-ID2, T-ID3),
whereby the correspondence is only sufficient (U-FT) if the degree of correspondence is above a defined threshold value (SW) and, when it comes to ascertaining the degree of correspondence, the time and position correspondence of the starting and ending points (SP, EP) of the individual travel route (FR) and the individual movement routes (TR, TR1, TR2, TR3, TR4) that are to be compared to it are given a higher weighting than points (P1, P2, P3) of the travel and movement routes (FR, TR) between the starting and ending points (SP, EP).

2. The system according to claim 1, **characterized in that** the system comprises a vehicle server (6) and the vehicle module (21) transmits the position and time data (F-OZ) to the vehicle server (6), and the individual travel route (FR) of the at least one vehicle (2) is determined by the vehicle server (6).

3. The system according to claim 2, **characterized in that** the vehicle server (6) is configured so that the users (1, 1 a, 1 b, 1 c) associated with at least one vehicle (2) by means of the analysis server (5) can be compared (V-NFM) to the drivers (F) and/or passengers (M) authorized for this vehicle (2), after which the vehicle server (6) can then store (SV6) the result of the comparison (V-NFM) and, in case of a correspondence (UN) between only one of the associated users (1a) with one of the authorized drivers (F) and/or passengers (M) for the vehicle (2), to indicate (IN) this one user (1a) as the driver (F) of this vehicle (2).

4. The system according to claim 3, **characterized in that** the vehicle server (6) is designed to send a first alarm signal (A1) to the system if there is no correspondence (UN) between associated users (1, 1 a, 1 b, 1 c) and authorized drivers (F) and/or passengers (M), or if there is not a sufficient correspondence (U-FT) with individual movement routes (TR, TR1, TR2, TR3, TR4) for this vehicle (2).

5. The system according to either claim 3 or 4, **characterized in that** the vehicle server (6) is designed so that, if there are several correspondences (UN) between associated users (1, 1 a, 1 b, 1 c) and authorized drivers (F) and/or passengers (M) for this vehicle (2), the user (1 a) whose individual movement route (TR1) displays the greatest level of correspondence (U-FT) with the individual travel route (FR) of the vehicle (2) is indicated as the driver (F).

6. The system according to one of the preceding claims, **characterized in that** the mobile telecommunications network (3) is configured to trigger the transmission (K) of terminal-specific position and time data (T-OZ) from the mobile terminals (11, 11 a, 11 b, 11c) to the network server (31), or **in that** an application is installed on the mobile terminal (11) that triggers the transmission (K) of terminal-specific position and time data (T-OZ) to the network server (31).

7. The system according to one of the preceding claims, **characterized in that** driving data (FD) is acquired from the vehicle-specific position and time data (F-OZ) and/or in that the vehicle (2) is equipped with one or more driving sensors (24), preferably acceleration sensors (24), that send the driving data (FD) to the vehicle module (21), and the vehicle module (21) transmits this driving data (FD), together with the appertaining position and time data (F-OZ), to the system.

8. The system according to claim 7, **characterized in that** the analysis server (5) and/or the vehicle server (6) are configured to associate the driving data (FD1, FD2) with the user (1 a) who has been identified as the driver (F), to accumulate (AK) the driving data (FD1, FD2) for all trips of this user (1 a), to determine a specific driving behavior (FV) for the user (1a) on the basis of the accumulated driving data (FD-A), and to use the specific driving behavior (FV) to identify a specific user (1 a, 1 b, 1 c) as the driver (F) from among a group of several users (1 a, 1 b, 1 c) who could possibly be the drivers (F) and/or to verify the identification of one of the users (1 a, 1b, 1c) as the driver (F).

9. A method for operating the system according to claim 1, comprising at least one vehicle (2) with an associated individual vehicle ID (F-ID) and with a vehicle module (21), comprising at least one mobile telecommunications network (3) with a network server (31) and several mobile terminals (11, 11 a, 11 b, 11c) that are suitable for communication at least in the mobile telecommunications network (3), comprising one or more data storage units (4) and an analysis server (5), comprising the following steps:
- registering (R) authorized drivers (F) and/or passengers (M) in the system with personal data (PD) and terminal IDs (T-ID) for the mobile terminals (11) of the drivers (F) and/or passengers (M),
- transmitting (UF) vehicle-specific position and time data (F-OZ) to the system via the vehicle module (21),
- transmitting (UT) terminal-specific position and time data (T-OZ) via the network server (31) to the system, whereby individual terminal IDs (T-ID, T-ID1, T-ID2, T-ID3) are associated with each of the mobile terminals (11, 11 a, 11 b, 11c), and the users (1, 1 a, 1 b, 1 c) of the mobile terminals (11, 11 a, 11 b, 11c) can be identified on the basis of the individual terminal IDs (T-ID, T-ID1, T-ID2, T-ID3),
- storing (S) the vehicle-specific position and time data (F-OZ), together with the vehicle ID (F-ID) for the at least one vehicle (2), and storing (S) the terminal-specific position and time data (T-OZ), together with the terminal IDs (T-ID, T-ID1, T-ID2, T-ID3) as well as the personal data (PD) of the users (1, 1 a, 1 b, 1 c) associated with the terminal IDs (T-ID, T-ID1, T-ID2, T-ID3) for each of the mobile terminals (11, 11 a, 11 b, 11c), in one or more data storage units (4),
- ascertaining (ER) the individual travel route (FR) and the individual person-specific movement routes (TR, TR1, TR2, TR3, TR4) on the basis of the stored vehicle-specific position and time data (F-OZ) and of the terminal-specific position and time data (T-OZ),
- comparing (VG) the ascertained individual travel route (FR) to the ascertained movement routes (TR, TR1, TR2, TR3, TR4) in an analysis server (5),
- linking (V) the vehicle ID (F-ID) of the at least one vehicle (2) to one or more terminal IDs (T-ID, T-ID1, T-ID2, T-ID3) in case of a sufficient correspondence (U-FT) - at least during a certain time interval - between the individual travel route (FR) associated with the vehicle ID (F-ID) and the individual movement routes (TR, TR1, TR2, TR3) associated with the one or more terminal IDs (T-ID, T-ID1, T-ID2, T-ID3), whereby the correspondence is only sufficient (U-FT) if the degree of correspondence is above a defined threshold value (SW) and, when it comes to ascertaining the degree of correspondence, the time and position correspondence of the starting and ending points (SP, EP) of the individual travel route (FR) and the individual movement routes (TR, TR1, TR2, TR3, TR4) that are to be compared to it are given a higher weighting than points (P1, P2, P3) of the travel and movement routes (FR, TR) between the starting and ending points (SP, EP), and
- storing (SV4) the linking (V) of the vehicle ID (F-ID) with the terminal IDs (T-ID, T-ID1, T-ID2, T-ID3), together with the personal data (PD) of the users (1, 1 a, 1b, 1c) associated with the terminal IDs (T-ID, T-ID1, T-ID2, T-ID3), in the data storage unit or units (4).

10. The method according to claim 9, comprising the additional steps:
- storing (SFM) authorized drivers (F) and/or passengers (M) for the at least one vehicle (2) in a vehicle server (6) that is connected at least to the data storage unit or units (4),
- comparing (V-NFM) the users (1, 1 a, 1 b, 1 c) of this vehicle (2) that have been associated by means of the analysis server (5) with the drivers (F) and/or passengers (M) authorized for this vehicle (2), and
- storing (SV6) the result of the comparison (V-NFM), and
- in case there is a correspondence (UN) of only one of the associated users (1 a) with one of the authorized drivers (F) and/or passengers (M) for this vehicle (2), the vehicle server (6) indicates (IN) this one user (1a) as the driver (F) of this vehicle (2),
- in case there is not a correspondence (UN) between associated users (1, 1 a, 1 b, 1c) and authorized drivers (F) and/or passengers (M), or not a sufficient correspondence (U-FT) with individual movement routes (TR, TR1, TR2, TR3, TR4) for this vehicle (2), a first alarm signal (A1) is sent to the system, or
- in case there are several correspondences (UN) between associated users (1, 1 a, 1 b, 1 c) and authorized drivers (F) and/or passengers (M) for this vehicle (2), the user whose individual movement route (TR1) displays the greatest correspondence (U-FT) with the individual travel route (FR) for the vehicle (2) is indicated (IN) as the driver (F) of this vehicle (2).

11. The method according to claim 10, comprising the additional steps:
- analyzing (AN) the acquired driving data (FD) in the vehicle server (6) or in the analysis server (5), and
- associating the driving data (FD) with the driver (F) indicated (IN) for this vehicle (2).

12. The method according to claim 11, comprising the additional steps:
that the associated driving data (FD1, FD2) is accumulated (AK) for the identified user (1 a) as the driver (F) for all trips of this user (1 a) and, on the basis of the accumulated driving data (FD-A), a specific driving behavior (FV) is determined for the identified user (1 a), whereby the specific driving behavior is used to identify one of the users (1 a, 1 b, 1 c) as the driver (F) and/or to verify the identification of one of the users (1 a) as the driver (F).

## Revendications

1. Système destiné à constater le nombre et l'identité d'utilisateurs (1) dans un véhicule (2), comprenant :
- au moins un véhicule (2) comportant un identifiant de véhicule individuel associé (F-ID) et un module de véhicule (21) pour la transmission sans fil (UF), au système, de données géographiques et temporelles relatives au véhicule (F-OZ) ;
- au moins un réseau radio mobile (3) comportant un serveur de réseau (31) et plusieurs terminaux mobiles (11, 11 a, 11 b, 11 c) adaptés pour la communication au moins dans le réseau radio mobile (3), des identifiants de terminaux individuels (T-ID, T-ID1, T-ID2, T-ID3) étant associés aux terminaux mobiles respectifs (11, 11 a, 11 b, 11 c) et les utilisateurs (1, 1 a, 1 b, 1 c) des terminaux mobiles (11, 11 a, 11 b, 11 c) pouvant être identifiés à l'aide de l'identifiant de terminal (T-ID, T-ID1, T-ID2, T-ID3) et le serveur de réseau (31) étant conçu pour transmettre (UT) au système des données géographiques et temporelles relatives aux terminaux (T-OZ) ;
- une ou plusieurs mémoires de données (4) pour stocker (S) ensemble les données géographiques et temporelles relatives au véhicule (F-OZ) et l'identifiant de véhicule (F-ID) pour déterminer (ER) l'itinéraire routier individuel (FR) de l'au moins un véhicule (2) et pour stocker (S) ensemble les données géographiques et temporelles relatives aux terminaux (T-OZ) et les identifiants de terminaux (T-ID, T-ID1, T-ID2, T-ID3) ainsi que des données personnelles (PD) des utilisateurs (1, 1a, 1 b, 1 c) associés aux identifiants de terminaux (T-ID, T-ID1, T-ID2, T-ID3) pour déterminer (ER) des itinéraires de déplacement personnels individuels (TR, TR1, TR2, TR3) pour chacun des terminaux mobiles (1, 1a,1b, 1 c) ;
- un serveur d'analyse (5) qui est conçu pour accéder à l'une ou aux plusieurs mémoires de données (4) et pour comparer (VG) l'itinéraire routier individuel déterminé (FR) avec les itinéraires de déplacement individuels déterminés (TR, TR1, TR2, TR3, TR4) et pour, en cas de coïncidence (U-FT) suffisante, au moins dans un intervalle de temps, entre l'au moins un itinéraire routier individuel (FR) et un ou plusieurs des itinéraires de déplacement individuels (TR, TR1, TR2, TR3, TR4), associer (V) l'identifiant de véhicule concerné (F-ID) aux identifiants de terminaux (T-ID, T-ID1, T-ID2, T-ID3) associés à ces itinéraires de déplacement individuels (TR, TR1, TR2, TR3, TR4) et le sauvegarder (SV4) avec les données personnelles (PD) des utilisateurs (1, 1a, 1b, 1c) associés aux identifiants de terminaux (T-ID, T-ID1, T-ID2, T-ID3) dans la ou les mémoires de données (4),
la coïncidence n'étant suffisante (U-FT) que si le degré de coïncidence est supérieur à une valeur seuil définie (SW) et si, pour le degré de coïncidence, la coïncidence temporelle et géographique de points de départ et d'arrivée (SP, EP) de l'itinéraire routier individuel (FR) et des itinéraires de déplacement individuels (TR, TR1, TR2, TR3, TR4) à comparer avec celui-ci est prise en compte avec une pondération plus élevée que des points (P1, P2, P3) des itinéraires routiers et de déplacement (FR, TR) entre les points de départ et d'arrivée (SP, EP).

2. Système selon la revendication 1, **caractérisé en ce que** le système comprend un serveur de véhicule (6) et **en ce que** le module de véhicule (21) transmet les données géographiques et temporelles (F-OZ) au serveur de véhicule (6) et **en ce que** l'itinéraire routier individuel (FR) de l'au moins un véhicule (2) est déterminé par le serveur de véhicule (6).

3. Système selon la revendication 2, **caractérisé en ce que** le serveur de véhicule (6) est conçu pour comparer (V-NFM) les utilisateurs (1, 1a, 1 b, 1c) associés à l'au moins un véhicule (2) au moyen du serveur d'analyse (5) avec les conducteurs (F) et/ou passagers (M) autorisés pour ce véhicule (2), pour stocker (SV6) le résultat de la comparaison (V-NFM) et pour, en cas de coïncidence (UN) entre uniquement l'un des utilisateurs associés (1a) et l'un des conducteurs (F) et/ou passagers (M) autorisés pour le véhicule (2), désigner (IN) cet utilisateur (1a) comme conducteur (F) de ce véhicule (2).

4. Système selon la revendication 3, **caractérisé en ce que** le serveur de véhicule (6) est prévu pour envoyer un premier signal d'alarme (A1) au système en cas de non-coïncidence (UN) entre utilisateurs associés (1, 1a, 1b, 1c) et conducteurs (F) et/ou passagers (M) autorisés ou de coïncidence insuffisante (U-FT) avec des itinéraires de déplacement individuels (TR, TR1, TR2, TR3, TR4) pour ce véhicule (2).

5. Système selon l'une des revendications 3 ou 4, **caractérisé en ce que** le serveur de véhicule (6) est prévu pour désigner en tant que conducteur (F), en cas de plusieurs coïncidences (UN) entre utilisateurs associés (1, 1a, 1b, 1c) et conducteurs (F) et/ou passagers (M) autorisés pour ce véhicule (2), l'utilisateur (1a) dont l'itinéraire de déplacement individuel (TR1) présente la plus grande coïncidence (U-FT) avec l'itinéraire routier individuel (FR) pour le véhicule (2).

6. Système selon l'une des revendications précédentes, **caractérisé en ce que** le réseau radio mobile (3) est conçu pour déclencher la transmission (K) de données géographiques et temporelles relatives aux terminaux (T-OZ) des terminaux mobiles (11, 11 a, 11 b, 11 c) au serveur de réseau (31) ou **en ce qu'**est installée, sur le terminal mobile (11), une application qui déclenche la transmission (K), au serveur de réseau (31), de données géographiques et temporelles relatives aux terminaux (T-OZ).

7. Système selon l'une des revendications précédentes, **caractérisé en ce que** des données de conduite (FD) sont acquises à partir des données géographiques et temporelles relatives au véhicule (F-OZ) et/ou **en ce que** le véhicule (2) est équipé d'un ou de plusieurs capteurs de marche (24), de préférence de capteurs d'accélération (24), qui envoient les données de conduite (FD) au module de véhicule (21) et **en ce que** le module de véhicule (21) transmet au système ces données de conduite (FD) avec les données géographiques et temporelles associées (F-OZ).

8. Système selon la revendication 7, **caractérisé en ce que** le serveur d'analyse (5) et/ou le serveur de véhicule (6) sont conçus pour associer les données de conduite (FD1, FD2) à l'utilisateur (1a) identifié comme conducteur (F), pour accumuler (AK) les données de conduite (FD1, FD2) pour tous les trajets de cet utilisateur (1a), pour définir, à partir des données de conduite accumulées (FD-A), un comportement de conduite spécifique (FV) pour l'utilisateur (1a) et pour utiliser le comportement de conduite spécifique (FV) pour identifier un utilisateur déterminé (1a, 1 b, 1 c) comme étant le conducteur (F) parmi un groupe de plusieurs utilisateurs (1a, 1b, 1c) susceptibles d'être des conducteurs (F) possibles et/ou pour vérifier l'identification de l'un des utilisateurs (1a, 1 b, 1 c) comme étant le conducteur (F).

9. Procédé d'exploitation du système selon la revendication 1, comprenant au moins un véhicule (2) avec un identifiant de véhicule individuel associé (F-ID) et un module de véhicule (21), au moins un réseau radio mobile (3) avec un serveur de réseau (31) et plusieurs terminaux mobiles (11, 11 a, 11 b, 11 c) adaptés pour la communication au moins dans le réseau radio mobile (3), une ou plusieurs mémoires de données (4) et un serveur d'analyse (5), et comprenant les étapes suivantes :
- enregistrement (R) de conducteurs (F) et/ou de passagers (M) autorisés dans le système avec des données personnelles (PD) et des identifiants de terminaux (T-ID) pour les terminaux mobiles (11) des conducteurs (F) et/ou des passagers (M) ;
- transmission (UF) au système, par le module de véhicule (21), de données géographiques et temporelles relatives au véhicule (F-OZ) ;
- transmission (UT) au système, par le serveur de réseau (31), de données géographiques et temporelles relatives aux terminaux (T-OZ), des identifiants de terminaux individuels (T-ID, T-ID1, T-ID2, T-ID3) étant associés aux terminaux mobiles respectifs (11, 11 a, 11 b, 11 c) et les utilisateurs (1, 1 a, 1 b, 1 c) des terminaux mobiles (11, 11 a, 11 b, 11 c) pouvant être identifiés à l'aide des identifiants de terminaux individuels (T-ID, T-ID1, T-ID2, T-ID3) ;
- dans une ou plusieurs mémoires de données (4), stockage (S) des données géographiques et temporelles relatives au véhicule (F-OZ) avec l'identifiant de véhicule (F-ID) pour l'au moins un véhicule (2) et stockage (S) des données géographiques et temporelles relatives aux terminaux (T-OZ) avec les identifiants de terminaux (T-ID, T-ID1, T-ID2, T-ID3) ainsi que des données personnelles (PD) des utilisateurs (1, 1a, 1b, 1c) associés aux identifiants de terminaux (T-ID, T-ID1, T-ID2, T-ID3) pour chacun des terminaux mobiles (11, 11a, 11b, 11c);
- détermination (ER) de l'itinéraire routier individuel (FR) et des itinéraires de déplacement personnels individuels (TR, TR1, TR2, TR3, TR4) à partir des données géographiques et temporelles stockées relatives au véhicule (F-OZ) et des données géographiques et temporelles stockées relatives aux terminaux (T-OZ) ;
- comparaison (VG) de l'itinéraire routier individuel déterminé (FR) avec les itinéraires de déplacement déterminés (TR, TR1, TR2, TR3, TR4) dans un serveur d'analyse (5),
- association (V) de l'identifiant de véhicule (F-ID) de l'au moins un véhicule (2) à un ou plusieurs identifiants de terminaux (T-ID, T-ID1, T-ID2, T-ID3) en cas de coïncidence (U-FT) suffisante, au moins dans un intervalle de temps, entre l'itinéraire routier individuel (FR) associé à l'identifiant de véhicule (F-ID) et les itinéraires de déplacement individuels (TR, TR1, TR2, TR3) associés à un ou plusieurs identifiants de terminaux (T-ID, T-ID1, T-ID2, T-ID3), la coïncidence n'étant suffisante (U-FT) que si le degré de coïncidence est supérieur à une valeur seuil définie (SW) et si, pour le degré de coïncidence, la coïncidence temporelle et géographique de points de départ et d'arrivée (SP, EP) de l'itinéraire routier individuel (FR) et des itinéraires de déplacement individuels (TR, TR1, TR2, TR3, TR4) à comparer avec celui-ci est prise en compte avec une pondération plus élevée que des points (P1, P2, P3) des itinéraires routiers et de déplacement (FR, TR) entre les points de départ et d'arrivée (SP, EP) et
- sauvegarde (SV4), dans la ou les mémoires de données (4), de l'association (V) de l'identifiant de véhicule (F-ID) aux identifiants de terminaux (T-ID, T-ID1, T-ID2, T-ID3) avec les données personnelles (PD) des utilisateurs (1, 1a, 1b, 1c) associés aux identifiants de terminaux (T-ID, T-ID1, T-ID2, T-ID3).

10. Procédé selon la revendication 9, comprenant les étapes supplémentaires suivantes :
- sauvegarde (SFM) de conducteurs (F) et/ou de passagers (M) autorisés pour l'au moins un véhicule (2) dans un serveur de véhicule (6) qui est relié au moins à la ou aux mémoires de données (4) ;
- comparaison (V-NFM) des utilisateurs (1, 1a, 1b, 1c) de ce véhicule (2) associés au moyen du serveur d'analyse (5) avec les conducteurs (F) et/ou passagers (M) autorisés pour ce véhicule (2) et
- stockage (SV6) du résultat de la comparaison (V-NFM) et
- en cas de coïncidence (UN) entre uniquement l'un des utilisateurs associés (1a) et l'un des conducteurs (F) et/ou passagers (M) autorisés pour ce véhicule (2), désignation (IN) de cet utilisateur (1a) comme conducteur (F) de ce véhicule (2) par le serveur de véhicule (6) ;
- en cas de non-coïncidence (UN) entre utilisateurs associés (1, 1a, 1b, 1c) et conducteurs (F) et/ou passagers (M) autorisés ou de coïncidence insuffisante (U-FT) avec des itinéraires de déplacement individuels (TR, TR1, TR2, TR3, TR4) pour ce véhicule (2), envoi d'un premier signal d'alarme (A1) au système ou
- en cas de plusieurs coïncidences (UN) entre utilisateurs associés (1, 1a, 1b, 1 c) et conducteurs (F) et/ou passagers (M) autorisés pour ce véhicule (2), désignation (IN), comme conducteur (F) de ce véhicule (2), de l'utilisateur (1a) dont l'itinéraire de déplacement individuel (TR1) présente la plus grande coïncidence (U-FT) avec les itinéraires routiers individuels (FR) pour le véhicule (2).

11. Procédé selon la revendication 10, comprenant les étapes supplémentaires suivantes :
- analyse (AN) de données de conduite saisies (FD) dans le serveur de véhicule (6) ou le serveur d'analyse (5) et
- affectation des données de conduite (FD) au conducteur (F) désigné (IN) pour ce véhicule (2).

12. Procédé selon la revendication 11, comprenant les étapes supplémentaires suivantes :
les données de conduite affectées (FD1, FD2) pour l'utilisateur (1a) identifié comme étant le conducteur (F) sont accumulées (AK) pour tous les trajets de cet utilisateur (1 a) et un comportement de conduite spécifique (FV) est déterminé pour l'utilisateur identifié (1a) à partir des données de conduite accumulées (FD-A), le comportement de conduite spécifique étant utilisé pour identifier l'un des utilisateurs (1 a, 1 b, 1 c) en tant que conducteur (F) et/ou pour vérifier l'identification de l'un des utilisateurs (1a) comme étant le conducteur (F).
